(19) Europäisches Patentamt
European Patent Office
Office européen des brevets

(11) **EP 3 875 280 B1**

(12) **EUROPÄISCHE PATENTSCHRIFT**

(45) Veröffentlichungstag und Bekanntmachung des Hinweises auf die Patenterteilung:
**28.08.2024 Patentblatt 2024/35**

(21) Anmeldenummer: **21160259.4**

(22) Anmeldetag: **02.03.2021**

(51) Internationale Patentklassifikation (IPC):
**B41J 3/407** (2006.01)     **B25J 11/00** (2006.01)

(52) Gemeinsame Patentklassifikation (CPC):
**B25J 11/0075; B41J 3/4073**

(54) **VERFAHREN ZUR DIGITALEN BESCHICHTUNG DREIDIMENSIONALER WERKSTÜCKOBERFLÄCHEN**

METHOD FOR DIGITALLY COATING THREE-DIMENSIONAL WORKPIECE SURFACES

PROCÉDÉ DE REVÊTEMENT NUMÉRIQUE DES SURFACES DE PIÈCES TRIDIMENSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2020 DE 102020105704**

(43) Veröffentlichungstag der Anmeldung:
**08.09.2021 Patentblatt 2021/36**

(73) Patentinhaber: **FPT Robotik GmbH & Co. KG**
**88279 Amtzell (DE)**

(72) Erfinder:
• **KARLSTEDT, Florian**
**45359 Essen (DE)**
• **SPIERING, Tim**
**87700 Memmingen (DE)**
• **MARX, Axel**
**59192 Bergkamen (DE)**

(74) Vertreter: **Michalski Hüttermann & Partner Patentanwälte mbB**
**Kaistraße 16A**
**40221 Düsseldorf (DE)**

(56) Entgegenhaltungen:
EP-A1- 2 287 722        DE-A1- 102010 004 496
DE-B4- 102010 004 496   US-A- 5 436 027
US-A1- 2009 169 719     US-A1- 2015 062 244
US-A1- 2017 232 733     US-A1- 2019 091 712
US-B2- 9 878 533

EP 3 875 280 B1

**Beschreibung**

Die vorliegende Erfindung betrifft ein digitales Beschichtungsverfahren für dreidimensionale Werkstückoberflächen, wobei die Beschichtung über eine Relativbewegung eines Druckkopfs relativ zur Oberfläche des Werkstücks und Ausstoßens eines Beschichtungsmittels vom Druckkopf zur Werkstückoberfläche hin erfolgt und mindestens die Verfahrensschritte umfasst:

a) Bereitstellen eines oder mehrerer baugleicher Werkstücke mit einem dreidimensionalen Werkstückoberflächenprofil;

b) Festlegen einer Soll-Verfahrbahn des Druckkopfes über den zu beschichtenden Bereich der dreidimensionalen Werkstückoberfläche, wobei die Festlegung der Soll-Verfahrbahn mindestens die orts- und zeitabhängigen Steuerdaten zur Bewegung des Druckkopfes auf der Soll-Verfahrbahn umfasst;

c) Ein- oder mehrmaliges Verfahren des Druckkopfes mittels der im Verfahrensschritt b) festgelegten Steuerdaten der Soll-Verfahrbahn und Bestimmung der zeit- und ortsaufgelösten Ist-Position des Druckkopfes entlang der Ist-Verfahrbahn ohne Ausstoß eines Beschichtungsmittels;

d) Bereitstellen der Soll-Verfahrbahn entsprechender Soll-Druckkopfdaten und Anpassen der Soll- auf Ist-Druckkopfdaten, wobei die Anpassung der Druckkopfdaten zumindest die Zeit- und/oder Ortsunterschiede der Ist- zur Soll-Verfahrbahn umfasst; und

e) Verfahren des Druckkopfes und Beschichten der Werkstückoberfläche unter Ausstoß eines Beschichtungsmittels, wobei die Bewegung des Druckkopfs entsprechend der Steuerdaten der Soll-Verfahrbahn aus Verfahrensschritt b) und der Ausstoß des Beschichtungsmittels anhand der angepassten Ist-Druckkopfdaten aus Verfahrensschritt d) erfolgt;

wobei der Verfahrensschritt e) ein oder mehrmals an baugleichen Werkstücken durchgeführt wird, wobei unabhängig von den weiteren Ist-Positionen des Druckkopfes auf den jeweiligen Verfahrbahnen keine weitere Anpassung der Steuerdaten der Soll-Verfahrbahn erfolgt. Des Weiteren umfasst die vorliegende Erfindung ein System zur Durchführung des erfindungsgemäßen Verfahrens sowie die Verwendung des Verfahrens zur Beschichtung von Automobil- oder Flugzeugteilen.

Das Aufbringen ästhetischer Dekore oder funktionaler Beschichtungen auf Oberflächen über Druckverfahren gehört seit langem zum Stand der Technik. So können beispielsweise mittels digitaler Beschichtungsverfahren, wie dem Laser- oder Inkjet-Verfahren, Oberflächen mit individuellen Motiven oder weiteren Funktionen und Eigenschaften versehen werden. Das fundamentale Prinzip ist dabei identisch und beinhaltet eine Relativbewegung zwischen einem Druck-Beschichtungskopf und der zu beschichtenden Oberfläche. Letztere kann dann wahlweise direkt (Inkjet) oder indirekt (Laser), d.h. über einen Umweg über eine Trommel, beschichtet werden. Der Beschichtungsvorgang gestaltet sich in den Fällen als einfach, in welchen bedingt durch eine zweidimensionale Oberflächengeometrie des Produktes ein gleichbleibend festes Verhältnis zwischen Druckkopf und Oberfläche eingehalten werden kann.

Im Falle ungleichmäßig gewölbter Oberflächen, beispielsweise mit Sprüngen im Höhenprofil und/oder partiell in eine oder zwei Richtungen gekrümmte Oberflächen, ist das Bedrucken oder Beschichten deutlich schwieriger, da ein gleichbleibender Abstand zwischen Beschichtungskopf und Oberfläche nicht konstant eingehalten werden kann. Insofern muss gerade die Aktorik des Beschichtungskopfes den veränderlichen Relationen zwischen Oberfläche und Druckkopf Rechnung tragen. Es sind deutlich komplexere Bewegungsmuster gefordert, wobei zur Bereitstellung eines effizienten Bedruckungsvorganges und zum Erhalt eines möglichst gleichbleibenden Druckergebnisses in Abhängigkeit der Oberflächendimensionen des Werkstücks, der Druckkopf zudem noch längere Wege zurücklegen muss. Lange Druckkopfwege und komplexe Bewegungsmuster führen zusammen mit den Schwierigkeiten in der Positionierung des Druckkopfes dazu, dass qualitativ hochwertige Beschichtungen mit komplexen Mustern oder funktionalen Strukturen nur unter extremen Schwierigkeiten an diesen Bauteilen erhältlich sind. Zwar kann man versuchen, über eine exakte und schnelle Kontrolle der Positionierung des Druckkopfes und Nachregelung derselben für die Fälle in denen die Abweichung von der Soll- zur Ist-Bahn zu groß wird, eine Homogenisierung der Beschichtung zu erreichen, jedoch führt dies in der Praxis in den allermeisten Fällen zu einer Verschlechterung des Druckbildes, da durch die Systemträgheit meistens eine Übersteuerung erreicht wird. Es erfolgen zu viele Repositionierungen des Druckkopfes, welche sich dann auch im Beschichtungsergebnis wiederfinden.

Auch in der Patentliteratur finden sich die unterschiedlichsten Ansätze zur Bedruckung oder Beschichtung komplexer Oberflächengeometrien.

So offenbart beispielsweise die EP 2 838 708 B1 ein Verfahren für den direkten dreidimensionalen Druck auf einen Fußbekleidungsartikel, welches Folgendes umfasst: entwerfen eines dreidimensionalen Musters für den Druck auf den Artikel; positionieren von mindestens einem Abschnitt des Artikels auf einer Ablage in einem dreidimensionalen Drucksystem, wobei der Abschnitt ein Gewebematerial umfasst und im Wesentlichen flach auf der Ablage positioniert wird; drucken eines dreidimensionalen Materials direkt auf das Gewebe des Artikelabschnitts unter Verwendung des entworfenen dreidimensionalen Musters und des dreidimensionalen Drucksystems; härten des gedruckten Materials; und entfernen des Artikelabschnitts aus dem dreidimensionalen Drucksystem; wobei der Artikelabschnitt mindestens eine nichtflache Oberfläche aufweist, die eine unregelmäßige Oberflächen-Topologie hat und wobei die mindestens eine nichtflache Oberfläche ein Substrat ist, auf dem das Drucken stattfindet und wobei das Drucken des dreidimensionalen Materials die Kompensation jeglicher Unregelmäßigkeiten der mindestens einen nicht flachen Oberfläche umfasst, indem der Abstand zwischen einem Druckkopf und der mindestens einen nichtflachen Oberfläche eingestellt wird, und/oder indem mindestens einer der Folgenden: Größe, Durchsatz und Verteilung von Material, das aus dem Druckkopf abgegeben wird, eingestellt wird.

In der DE10 2018 121 557 A1 ist ein Verfahren zum verzerrungsfreien Beschichten von Werkstücken mit bidirektional gekrümmten Oberflächen offenbart. Im Verfahren wird auf Basis bereitgestellter digitaler 2D-Dekordaten und digitaler 3D-Oberflächenprofildaten eines zu beschichtenden Werkstücks die Werkstückoberfläche in Rasterflächen aufgeteilt; die Werkstückoberfläche in eine oder mehrere Verfahrbahnen eines Beschichtungskopfes aufgeteilt; die Rasterflächen entlang des Normalenvektors der Verfahrbahn an die Druckkopf-Verfahrbahn projiziert; die Pixeldichte des Dekors für jede Rasterfläche als Funktion der Ergebnisse der Rasterprojektion angepasst und die Werkstückoberfläche auf Basis der angepassten Dekor-Druckdaten beschichtet.

In einem weiteren Dokument, der EP EP3208746A1, wird ein Verfahren zum Tintenstrahl-Bedrucken wenigstens eines gekrümmten Bereichs der Oberfläche eines Objekts mit einem Druckbild offenbart. In dem Bereich wird ein Raster von Tintentropfen aufgebracht und dadurch Druckpunkte erzeugt, wobei das Raster von einem Rechner berechnet wird und die Tintentropfen von einem Druckkopf mittels Düsen einer Düsenfläche des Druckkopfs erzeugt und im Bereich appliziert werden. Das Verfahren zeichnet sich durch folgende Schritte aus: a) Bereitstellen von Daten, welche das Druckbild darstellen, b) Bereitstellen oder Berechnen von Daten, welche den Bereich darstellen, c) Bereitstellen oder Berechnen von Bahndaten zu Bahnen, auf welchen sich der Druckkopf oder das Objekt bewegt, d) Berechnen der Applikationsorte der Tintentropfen unter Verwendung der Daten aus b) und c), e) Berechnen von Daten, welche auf einer Kachelung des Bereichs basieren, unter Verwendung der Daten aus d), f) Kalibration der Tonwerte unter Verwendung der Daten aus e), g) Rastern des Druckbildes unter Verwendung der Daten aus f), und h) Bedrucken des Bereichs mit dem gerasterten Druckbild.

Des Weiteren befassen sich die US 2009 169 719 A1, US 2015 062 244 A1, EP 2 287 722 A1, US 9 878 533 B2, DE 10 2010 004 496 A1 und die US 20190091712 A1 mit Druckverfahren zur Bedruckung von Oberflächen.

Trotz der schon bekannten Verfahren zum Beschichten 3-dimensionaler Oberflächen besteht weiterhin Bedarf an technischen Lösungen, welche unterschiedlichste, komplexe Oberflächengeometrien, und insbesondere komplexe Geometrien mit bi-direktional gekrümmten Oberflächenbereichen, über digitale Beschichtungsverfahren mit präzisen Beschichtungen versehen und somit die ursächlichen Ungenauigkeiten der Aktorik kompensieren können.

Es ist die Aufgabe der vorliegenden Erfindung ein Verfahren bereitzustellen, welches hoch reproduzierbar Dekore und funktionale Beschichtungen auf komplexe 3-dimensionale Oberflächen aufbringt und welches insbesondere die auf die Steuerung der involvierten Aktoren beruhenden Abweichungen reduziert. Es ist weiterhin die Aufgabe der vorliegenden Erfindung ein System und eine Verwendung für das erfindungsgemäße Verfahren bereitzustellen.

Gelöst wird die Aufgabe für das Verfahren durch die Merkmale des Anspruchs 1, für das System durch die Merkmale des Anspruchs 12 und für die erfindungsgemäße Verwendung durch die Merkmale des Anspruchs 13. Bevorzugte Ausführungsformen des Verfahrens und der Verwendung sind in den Unteransprüchen angegeben.

Erfindungsgemäß ist ein Verfahren zur digitalen Beschichtung dreidimensionaler Werkstückoberflächen, wobei die Beschichtung über eine Relativbewegung eines Druckkopfs relativ zur Oberfläche des Werkstücks und Ausstoßens eines Beschichtungsmittels vom Druckkopf zur Werkstückoberfläche hin erfolgt, mindestens umfassend die Verfahrensschritte:

a) Bereitstellen eines oder mehrerer baugleicher Werkstücke mit einem dreidimensionalen Werkstückoberflächenprofil;

b) Festlegen einer Soll-Verfahrbahn des Druckkopfes über den zu beschichtenden Bereich der dreidimensionalen Werkstückoberfläche, wobei die Festlegung der Soll-Verfahrbahn mindestens die orts- und zeitabhängigen Steuerdaten zur Bewegung des Druckkopfes auf der Soll-Verfahrbahn umfasst;

c) Ein- oder mehrmaliges Verfahren des Druckkopfes mittels der im Verfahrensschritt b) festgelegten Steuerdaten der Soll-Verfahrbahn und Bestimmung der zeit- und ortsaufgelösten Ist-Position des Druckkopfes entlang der Ist-Verfahrbahn mittels eines Sensors ohne Ausstoß eines Beschichtungsmittels;

d) Bereitstellen der Soll-Verfahrbahn entsprechender Soll-Druckkopfdaten und Anpassen der Soll- auf Ist-Druckkopfdaten, wobei die Anpassung der Druckkopfdaten zumindest die Zeit- und/oder Ortsunterschiede der Ist- zur Soll-Verfahrbahn umfasst; und

e) Verfahren des Druckkopfes und Beschichten der Werkstückoberfläche unter Ausstoß eines Beschichtungsmittels, wobei die Bewegung des Druckkopfs entsprechend der Steuerdaten der Soll-Verfahrbahn aus Verfahrensschritt b) und der Ausstoß des Beschichtungsmittels anhand der angepassten Ist-Druckkopfdaten aus Verfahrensschritt d) erfolgt;

wobei der Verfahrensschritt e) ein oder mehrmals an baugleichen Werkstücken durchgeführt wird, wobei unabhängig von den weiteren Ist-Positionen des Druckkopfes auf den jeweiligen Verfahrbahnen keine weitere Anpassung der Steuerdaten der Soll-Verfahrbahn erfolgt.

Überraschenderweise hat sich gezeigt, dass über oben angegebenes Verfahren sehr gleichmäßige und qualitativ hochwertige Beschichtungen auch komplexer dreidimensionaler Oberflächen erhalten werden. Des Weiteren hat sich für das Verfahren gezeigt, dass auch Beschichtungsserien an baugleichen Werkstücken deutlich gleichmäßiger vorgenommen werden können. Insofern ergibt sich für das wiederholte Beschichten von Oberflächen derselben Geometrie eine deutliche Qualitätssteigerung. Ohne durch die Theorie gebunden zu sein ergeben sich die erfindungsgemäßen Vorteile des Verfahrens daraus, dass auf eine komplexe Regelung des Beschichtungs- oder Druckkopfes während des Beschichtungsvorgang gänzlich verzichtet wird. Es wird eine Soll-Verfahrbahn des Druckkopfes vorgegeben, welche ohne eine Beschichtung aufzutragen ein- oder mehrmals durchgeführt wird. In diesem Lauf oder den Läufen wird die tatsächliche Ist-Verfahrbahn des Beschichtungskopf gemessen oder über eine Mittelwertbildung ermittelt, ohne das Beschichtungsmittel ausgestoßen wird. Anschließend erfolgt ein Abgleich zwischen der Soll- zur Ist-Verfahrbahn und die Druckdaten werden entsprechend der Abweichungen angepasst. In dem oder den folgenden Beschichtungsvorgängen wird die Position des Druckkopfes dann nicht auf die aktuellen Verhältnisse nachgeregelt. Insofern lassen sich Qualitätsschwankungen, welche auf ein direktes aktives Steuern des Druckkopfes zurück auf eine Soll-Verfahrbahn zurückzuführen sind, deutlich reduzieren oder gar gänzlich vermeiden. Dieses Verfahren kann insbesondere Vorteile bei großen Bauteilen zeigen, welche zudem auch noch komplexe Oberflächengeometrien aufweisen können. Die Kombination von großen Bauteilen mit komplexen Geometrien ist für digitale Beschichtungsverfahren, wie beispielsweise dem Ink-Jet-Verfahren, besonders schwierig, da die zeitlichen Fenster zum vernünftigen, aktiven Eingriff/Regelung in den Beschichtungsvorgang während des Beschichtens sehr klein sind und durch Fortentwicklung der Druckkopftechnik absehbar immer kleiner werden. Durch den Verzicht auf sonst übliche Regelungskreise wird in Summe ein deutlich besseres Druckbild erzielt, als es durch eine aktive Regelung des Druck- oder Beschichtungskopfes möglich wäre. Weiterhin können so die Kosten eines derartigen Systems aufgrund des Verzichts auf Hochgeschwindigkeitsregelkomponenten verringert werden.

Ein wesentlicher Faktor für den Vorteil des erfindungsgemäßen Verfahrens ist die Arbeitsweise der Druckköpfe, welche mittels ortsbezogener Druckdaten eine definierte Menge Tinte oder Farbe auf die Oberfläche aufbringen sollen. Die Initiierung der ortsbezogenen Signale zur Ansteuerung der jeweiligen Druckkopfdaten muss aufgrund der erforderlichen Prozesszeit für Positionserfassung, Signalübermittlung, Zuordnung und Bereitstellen der Druckdaten, Auslösen der Impulse sowie Flugdauer der Tinte oder Tropfen bereits zeitlich vor dem Erreichen der eigentlich, zu bedruckenden Position erfolgen. Das hat daher zur Folge, dass entsprechende Korrekturen als Teil des Steuerungsprozesses wiederum als eigenständiger Fehler wahrnehmbar werden.

Bei den Abweichungen lassen sich zwei wesentliche Fälle unterscheiden. Einerseits die ortsbedingen Fehler, verursacht durch abweichende Ist-Positionen und andererseits die zeitbedingten Fehler, verursacht durch abweichende Geschwindigkeiten und Beschleunigungswerte des Druckkopfes. Hieraus resultieren entsprechend unterschiedliche und je nach Geometrie unterschiedlich stark ausgeprägte Fehlerbilder. Während Positionsfehler insbesondere bei ortselektiven Elementen kritisch für die funktionalen Eigenschaften sind, führen steuerungsbedingte Korrekturen dieser Fehler verstärkt zu Verwackelungen und Ungenauigkeiten im Dekor. Diese lassen sich über das erfindungsgemäße Verfahren verhindern. Zeitbezogene Abweichungen sind insbesondere durch Abweichungen der Auftragsvolumina und/oder Auftragsposition wahrnehmbar, während die zugehörigen steuerungsbedingten Korrekturen in Form von "Rattermarken" mit starken Volumenschwankungen auf der Oberfläche wahrnehmbar sind. Auch diese lassen sich durch das erfindungsgemäße Verfahren verhindern.

Gegenüber den konventionellen Verfahren der Oberflächenveredlung, besteht ein wesentlicher Vorteil der digitalen Beschichtungsverfahren darin, auch gekrümmte Oberflächen beschichten zu können. Diese können ortsselektiv anschließend funktionell oder strukturell abweichende Oberflächenelemente aufweisen. Hierzu können neben leitfähigen oder anderen funktionalen Elementen auch abweichende Schichtdicken sowie lokale Anpassung der Oberflächeneigenschaften wie Lichtdurchlässigkeit, Elastizität oder Haptik zählen.

Das erfindungsgemäße Verfahren ist ein Verfahren zur digitalen Beschichtung dreidimensionaler Werkstückoberflächen, wobei die Beschichtung über eine Relativbewegung eines Druckkopfs relativ zur Oberfläche des Werkstücks und Ausstoßens eines Beschichtungsmittels vom Druckkopf zur Werkstückoberfläche hin erfolgt. 3D-Werkstücke sind Werkstücke welche, zumindest abschnittsweise, eine nicht planare Oberfläche aufweisen. Sie stellen insbesondere nicht nur rein planare 2D-Gebilde dar, sondern können beispielsweise Ausnehmungen in der Fläche und/oder Kanten aufweisen, an denen ebenfalls zu beschichten ist. Die Ausnehmungen und Kanten ergeben einen Höhenversatz und wechselnde Steigungen in der Oberfläche. Zusätzlich oder alternativ können die Werkstückoberfläche auch Höhenunterschiede und Unterschiede in der Steigung der Oberfläche selbst aufweisen, wobei die Ortsposition dieser Höhenunterschiede dann von weiterer Werkstückoberfläche umgeben ist. Bedingt durch die Höhenunterschiede und aufgrund der Oberflächensteigung kann das Werkstück abschnittsweise gekrümmt sein. Die Werkstückoberfläche wird dabei mittels eines digitalen Beschichtungsverfahrens, beispielsweise einem Inkjet-Verfahren, beschichtet. Die Verfahren als solche sind aus dem Stand der Technik bekannt und können beinhalten, dass aus einer Düse unter Druck das Beschichtungsmittels ausgestoßen wird. Als Funktion des Beschichtungsmittels können sich unterschiedliche Arten von Beschichtungen ergeben. Handelt es sich bei dem Beschichtungsmittels um eine Farbe, so können dekorative Beschichtungen erhalten werden. Es können aber auch Beschichtungsmittel mit anderen Funktionen verwendet werden, wobei sich dann dementsprechend keine dekorativen, sondern funktionale Beschichtungen ergeben. So können beispielsweise über eine Inkjet-Beschichtung leitfähige Strukturen auf Oberflächen aufgedruckt werden. Weiterhin kann das Beschichtungsmittel mit dem Oberflächenmaterial eine Verbindung eingehen oder sich besonders gut wieder von diesem lösen lassen, bzw. die Anhaftung weiterer Schichten durch weitere Beschichtungsverfahren, wie dem Lackieren, partiell fördern und/oder vermeiden. Der Druckkopf kann dabei mehrere Düsen aufweisen. Üblicherweise können die Druckköpfe mehrere, einzeln steuerbare Düsen aufweisen, wobei die Düsen üblicherweise in Reihen einer Matrix angeordnet sind.

Das erfindungsgemäße Verfahren beinhaltet im Verfahrensschritt a) das Bereitstellen eines oder mehrerer baugleicher Werkstücke mit einem dreidimensionalen Werkstückoberflächenprofil. Das Verfahren kann also erfindungsgemäß an einem einzigen oder an mehreren, baugleichen Werkstücken durchgeführt werden. Die Werkstücke weisen eine dreidimensionale Oberfläche auf und liegen insofern nicht planar, beispielsweise in Form einer Schicht, vor. Das Bereitstellen der Werkstücke kann beispielsweise darin bestehen, dass die Werkstücke an einem Träger, einem Band oder händisch bereitgestellt werden.

Im Verfahrensschritt b) erfolgt das Festlegen einer Soll-Verfahrbahn des Druckkopfes über den zu beschichtenden Bereich der dreidimensionalen Werkstückoberfläche, wobei die Festlegung der Soll-Verfahrbahn mindestens die orts- und zeitabhängigen Steuerdaten zur Bewegung des Druckkopfes auf der Soll-Verfahrbahn umfasst. Als Verfahrbahn des Druckkopfes wird im Weiteren eine Relativbewegung zwischen Druckkopf und Werkstück bezeichnet, bei welcher der Druckkopf und/oder das Werkstück zueinander bewegt werden. Zur Beschichtung des Werkstücks muss der Druckkopf eine Relativbewegung zum Werkstück ausführen, um die zu beschichtenden Bereiche abzudecken. Dies kann prinzipiell dadurch erfolgen, dass entweder das Werkstück oder aber der Druckkopf bewegt wird. Im erfindungsgemäßen Fall wird der Druckkopf um das Werkstück herumbewegt. Zum Beschichten der entsprechend festgelegten Bereiche auf der Werkstückoberfläche wird eine Verfahrbahn des Druckkopfes vorgegeben, die Soll-Verfahrbahn, auf welcher sich der Druckkopf idealerweise über die zu beschichtenden Bereiche der Werkstückoberfläche bewegt. Zur Festlegung dieser Verfahrbahn werden die Ortskoordinaten des Druckkopfes festgelegt, welcher dieser zumindest einnehmen muss, um die entsprechenden Oberflächenbereiche des Werkstücks zu beschichten. Des Weiteren umfasst die Festlegung der Soll-Verfahrbahn des Druckkopfes die zeitlichen Abhängigkeiten zwischen den einzelnen Ortspositionen des Druckkopfes. Dies ist insbesondere wichtig, da das Druckergebnis und hier insbesondere das Auftreffen der einzelnen Beschichtungstropfen auf die Oberfläche des Werkstücks nicht nur von der Position, sondern auch von der Geschwindigkeit des Druckkopfes abhängt. Die Steuerdaten für die Soll-Verfahrbahn des Druckkopfes umfassen also den Weg und die für die Zurücklegung des Weges benötigten Informationen bezüglich der Beschleunigung und des Abbremsens des Druckkopfes.

Der Verfahrensschritt c) umfasst das ein- oder mehrmalige Verfahren des Druckkopfes mittels der im Verfahrensschritt b) festgelegten Steuerdaten der Soll-Verfahrbahn und Bestimmung der zeit- und ortsaufgelösten Ist-Position des Druckkopfes entlang der Ist-Verfahrbahn ohne Ausstoß eines Beschichtungsmittels. In diesem Verfahrensschritt erfolgt ein Abfahren des festgelegten Weges des Druckkopfes und/oder des Werkstücks auf Basis der Steuerdaten der Soll-Verfahrbahn, welche die Aktorik, beispielsweise ein Roboterarm an welchem der Druckkopf befestigt ist, steuert. Auf dieser Bahn wird noch kein Beschichtungsmittel auf das zu beschichtende Werkstück abgegeben. Über Sensoren werden die Ist-Werte der Verfahrbahn bestimmt. Zu den Ist-Werten gehört die Position des Druckkopfes, die Position des Werkstückes in Relation zur Werkstückoberfläche und die zeitliche Abfolge der Einnahme der unterschiedlichen Druckkopf- über den zugehörigen Oberflächenpositionen. Es ergibt sich eine zeit- und ortsaufgelöste Trajektorie für den Druckkopf, welche im idealen Fall der Soll-Verfahrbahn des Druckkopfes entspricht. Üblicherweise ergeben sich aber Abweichungen zwischen der Soll- und der Ist-Verfahrbahn. Diese Abweichungen können entweder Ortsabweichungen und/oder zeitliche Verzögerungen des Druckkopfes oder ein Vorlauf auf der angedachten Soll-Verfahrbahn darstellen. Die Abweichungen ergeben sich durch die Trägheit, Ungenauigkeiten in der Aktorik und Steuerung inkl. der bedingten Justierungen und Korrekturen, an welcher der Druckkopf befestigt ist. Die Ist-Verfahrbahn kann beispielsweise über ein oder mehrere Sensoren, welche an dem Druckkopf oder der Werkstückaufnahme angebracht sind, verfolgt werden. So ist es beispielsweise möglich, dass am Druckkopf und/oder Werkstück ein Marker angebracht ist, welcher sich über eine Kamera verfolgen lässt. Aus dem Kameradaten lassen sich die Orts- und Zeitdaten für den Druckkopf gewinnen. Es ist aber auch möglich, dass andere Sensoren, wie beispielsweise Geschwindigkeits- und/oder Beschleunigungssensoren, angebracht sind, welche in Summe den zeitabhängigen Bahnverlauf des Druckkopfes abbilden können. Alternativ können einzelne oder sämtliche Verfahrbahnen auch durch eine Computersimulation der Aktorik erhalten oder über eine solche bestimmt werden.

Der Verfahrensschritt d) umfasst das Bereitstellen der Soll-Verfahrbahn entsprechender Soll-Druckkopfdaten und Anpassen der Soll- auf Ist-Druckkopfdaten, wobei die Anpassung der Druckkopfdaten zumindest die Zeit- und/oder Ortsunterschiede der Ist- zur Soll-Verfahrbahn umfasst. Zur ortsgenauen Beschichtung des Werkstückes werden neben den Orts- und Zeitdaten für die Verfahrbahn auch die Steuerdaten für den Druckkopf benötigt. Die Steuerdaten für den Druckkopf umfassen dabei beispielsweise die auszustoßende Menge an Beschichtungsmittel für jede Druckkopfdüse des Druckkopfes. Des Weiteren können diese Daten umfassen, ob sämtliche oder nur einige Düsen des Druckkopfes aktiv sein sollen. Die erste Angabe der Soll-Druckkopfdaten erfolgt auf Basis der Soll-Verfahrbahn. Aufgrund der Tatsache, dass die vorliegende Ist- von der Soll-Verfahrbahn abweicht, müssen die entsprechenden Soll-Druckkopfdaten auf die Ist-Verfahrbahn angepasst werden. Zur Anpassung der beiden Verfahrbahnen kann beispielsweise auf die örtlichen und die zeitlichen Unterschiede der beiden Verfahrbahnen abgestellt werden. Dieser Vorgang entspricht im Wesentlichen einem Soll-Ist-Vergleich. Auf Basis der Unterschiede kann beispielsweise der Zeitpunkt des Ausstoßens von Beschichtungsmittel, die Menge an Beschichtungsmittel oder die am Druckkopf zu verwendenden Düsen angepasst werden. Durch die Anpassung der Druckkopfdaten werden also die Unterschiede in den Verfahrbahnen kompensiert. Alternativ hierzu können die Ist-Druckdaten direkt über eine Betrachtung der Ausrichtung des Druckkopfes zur Werkstückoberfläche im Verlauf der Ist-Drucckopfverfahrbahn angepasst werden.

Im Verfahrensschritt e) erfolgt das Verfahren des Druckkopfes und Beschichten der Werkstückoberfläche unter Ausstoß eines Beschichtungsmittels, wobei die Bewegung des Druckkopfs entsprechend der Steuerdaten der Soll-Verfahrbahn aus Verfahrensschritt b) und der Ausstoß des Beschichtungsmittels anhand der angepassten Ist-Druckkopfdaten aus Verfahrensschritt d) erfolgt. Zur Beschichtung der Oberfläche des Werkstücks werden unterschiedliche Steuerdaten herangezogen. Zum einen erfolgt die Festlegung der Beschichtungsbahn über die Steuerdaten der Soll-Verfahrbahn. Es werden die Daten der Soll-Verfahrbahn verwendet, obwohl durch den vorherigen Verfahrensschritts feststeht, dass die Soll-Verfahrbahn von dem Druckkopf eigentlich nicht abgefahren wird. Die Relativbewegung zwischen Druckkopf und Oberfläche wird jedoch durch die Ist-Verfahrbahn beschrieben. Dieser Unterschied wird dadurch kompensiert, dass angepasste "Ist"-Druckkopfdaten zur Steuerung des Druckkopfes verwendet werden. Durch die Verwendung der angepassten Ist-Druckkopfdaten wird der Fehler zwischen Soll- und Ist-Verfahrbahn kompensiert. Dieser Verfahrensschritt führt überraschenderweise zu sehr guten Beschichtungsergebnissen, obwohl prinzipiell die Gefahr besteht, dass die nun abgefahrene Bahn sich ebenfalls von der Ist-Verfahrbahn unterscheidet. Es hat sich jedoch herausgestellt, dass die abweichungsbedingten Fehler reproduzierbar und die nicht reproduzierbaren, weiteren Fehler vernachlässigbar klein sind. Eine einmalige Anpassung der Druckkopfdaten ist zum Erhalt einer qualitativ hochwertigen Beschichtung ausreichend und anderen Verfahren überlegen, welche darauf basieren, dass Abweichungen der Druckkopfpositionen während des Beschichtens aktiv nachgeregelt werden.

Der Verfahrensschritt e) kann ein- oder mehrmals an baugleichen Werkstücken durchgeführt werden, wobei unabhängig von den weiteren Ist-Positionen des Druckkopfes auf den jeweiligen Verfahrbahnen keine weitere Anpassung der Steuerdaten der Soll-Verfahrbahn erfolgt. Überraschenderweise hat sich herausgestellt, dass das ein nur einmaliges Aufnehmen der Ist-Verfahrbahn ausreicht, um auch mehrere baugleiche Werkstücke hintereinander in ausreichender Qualität beschichten zu können. Durch das erfindungsgemäße Verfahren ist es aber auch möglich, dass nur ein Bauteil beschichtet wird. Hierbei ist es beispielsweise möglich, dass der Druckkopf mehrmals über die zu beschichtenden Bereiche des Werkstücks gefahren werden muss oder wenn das entsprechende Bauteil revers bedruckt werden soll. Letzteres beinhaltet eine Hin- wie auch eine Rückwärtsbewegung des Druckkopfes und/oder des Bauteils entlang der Druckkopf-Verfahrbahn. Auch in diesem Fall ergibt sich eine verbesserte Qualität der Beschichtung.

In einer bevorzugten Ausführungsform des Verfahrens kann die Anpassung der Soll- auf die Ist-Druckkopfdaten im Verfahrensschritt d) die Unterschiede in der ortsbezogenen Geschwindigkeit und Beschleunigung zwischen Ist- und Soll-Verfahrbahn umfassen. Für eine besonders effiziente Anpassung der Druckkopfdaten hat es sich als vorteilhaft erwiesen, dass neben der zeitabhängigen Position des Druckkopfes auch die aktuelle Geschwindigkeit und die Beschleunigung des Druckkopfes in die Korrektur einfließen. Die aktuelle Geschwindigkeit und Beschleunigung kann dabei beispielsweise als Vektor berücksichtigt werden, welcher die unterschiedlichen Geschwindigkeit- und Beschleunigungskomponenten als Funktion der Raumrichtungen berücksichtigt. Insbesondere bei komplexen Oberflächen werden im Rahmen der Bewegung entlang der Druckkopf-Verfahrbahn durch die kombinierten, dynamischen Bewegungen Kompensationen der Beschleunigungsabweichungen zwischen der Soll- und Ist-Verfahrbahn erforderlich. Diese weiteren Korrektur-Parameter können zu einem sauberen Druckbild beitragen.

Innerhalb einer bevorzugten Ausgestaltung des Verfahrens kann die Beschichtung im Verfahrensschritt e) nur auf Basis der zeitlichen Komponente der Ist-Druckkopfdaten erfolgen. Für viele Beschichtungsaufgaben hat es sich als besonders effizient herausgestellt, dass die Regelung des Druckkopfes im Beschichtungsdurchlauf nur anhand der zeitlichen Komponente der angepassten Ist-Druckkopfdaten erfolgt. In dieser Ausgestaltung wird insbesondere darauf verzichtet, dass ein Abgleich der Ortsposition des Druckkopfes im Beschichtungslauf berücksichtigt wird. Es ergibt sich eine einfache und effiziente Größe, welche eine verlässliche und reproduzierbare Beschichtung auch mehrerer baugleicher Werkstücke ermöglicht.

Innerhalb eines bevorzugten Aspektes des Verfahrens kann der gesamte auf der Soll-Verfahrbahn überstrichene Druckbereich des Druckkopfes um $\geq 5\%$ und $\leq 40\%$ größer sein als die zu beschichtende Oberfläche des Werkstücks. Zur Berücksichtigung möglicher Abweichungen zwischen Soll- und ist-Verfahrbahn hat es sich als günstig erwiesen, dass für die Soll-Verfahrbahn von vornherein ein größerer möglicher Druckbereich des Druckkopfes eingeplant wird. Diese Vergrößerung des eingeplanten Druckweges ist a priori nachteilig, da dies den Prozess verlängert. Auf der anderen Seite können durch den vergrößerten Druckbereich aber auftretende Abweichungen der Ist- von der Soll-Verfahrbahn einfacher kompensiert werden. So kann es beispielsweise günstig sein, dass die Soll-Verfahrbahn so ausgelegt wird, dass die Verfahrbahn in Bereichen partiell überlappt. In dieser Ausgestaltung können auftretende Orts-Abweichungen des Druckkopfes zu mehreren Zeitpunkten auf der Gesamtbahn über unterschiedliche Düsen des Druckkopfes sicher kompensiert werden. Dies kann insgesamt die Qualität des Druckprozesses erhöhen.

Im Rahmen einer bevorzugten Charakteristik des Verfahrens können die dreidimensionalen Werkstückoberflächen partiell bi-direktional gekrümmte Oberflächenbereiche aufweisen.

Oberflächenbereiche auf Werkstücken mit einer doppelten Krümmung, d.h. mit unterschiedlichen Krümmungen in unterschiedlichen Raumrichtungen, stellen eine besondere Herausforderung im Bereich der Beschichtungen dar. Aufgrund der doppelten Krümmung ergeben sich im Dekor ohne Anpassung des Druckbildes üblicherweise Verzerrungen, welche als deutlich qualitätsmindernd wahrgenommen werden. Mittels des erfindungsgemäßen Verfahrens lassen sich auch diese doppelt gekrümmten Oberflächenbereiche reproduzierbar beschichten, wobei dieses Verfahren besonders effizient ist, da auf eine aktive in-line Änderung der Regelung während des Beschichtungsvorgangs verzichtet wird.

In einer weiter bevorzugten Ausgestaltung des Verfahrens können im Verfahrensschritt d) die Druckkopfdaten einer weiteren Anpassung unterzogen werden, wobei die Anpassung die Schritte umfasst:

d1) Aufteilen der Werkstückoberfläche in Flächen eines Rasters, wobei die einzelnen Flächen des Rasters aus einem Linienzug äquidistanter Linien mit Abstand $X_0$ parallel zu einer X- und einem weiteren, dazu orthogonalen Linienzug äquidistanter Linien mit Abstand $Y_0$ parallel zur einer Y-Richtung ausgebildet werden;
d2) Projektion der die Rasterflächen begrenzenden Linienzüge an die Ist-Verfahrbahn oberhalb der betreffenden Rasterfläche, wobei die Projektion entlang des Normalenvektors der Verfahrbahn erfolgt;
d3) Anpassen der Ist-Druckkopfdaten für jede Rasterfläche, wobei die Anpassung der Druckdaten der Rasterfläche sowohl eine Funktion der ursprünglich bereitgestellten Soll-Druckkopfdaten als auch eine Funktion der Rasterprojektion an die Verfahrbahn ist. Mittels dieser weiteren, bauteilabhängigen Korrektur lassen sich durch das erfindungsgemäße Steuer-Grundprinzip weitere Zeit- und Qualitätsvorteile in der Beschichtung erreichen.

Im Schritt d1) wird die Werkstückoberfläche in Flächen eines Rasters aufgeteilt, wobei die einzelnen Flächen des Rasters aus einem Linienzug äquidistanter Linien mit Abstand $X_0$ parallel zu einer X- und einem weiteren, dazu orthogonalen Linienzug äquidistanter Linien mit Abstand $Y_0$ parallel zur einer Y-Richtung ausgebildet werden. Die Werkstückoberfläche wird also in quadratische oder rechteckige Raster aufgeteilt, wobei das Rastermaß für beide Richtungen gleich oder unterschiedlich sein kann. Das Rastermaß, also der Abstand zweier benachbarter Linien desselben Zuges, kann dabei beispielsweise 1 mm bis 10 cm betragen. Das Maß kann dabei als Funktion der auftretenden Oberflächengeometrie des Werkstücks und insgesamt als Funktion dessen räumlicher Abmessungen gewählt werden. Werkstücke mit 3D-Oberflächenabweichungen auf kleinen Längenskalen können bevorzugt ein kleines Rastermaß erfordern. Liegen die 3D-Eigenschaften des Werkstücks auf größeren Längenskalen, so kann eine größere Rasterung angebracht sein. Die Festlegung des XY-Koordinatensystems kann als Funktion der Oberflächensymmetrie des Werkstücks gewählt werden. Ein Linienzug besteht dabei aus mindestens zwei parallel verlaufenden Linien.

Im Schritt d2) erfolgt die Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt. Dieses Raster wird entlang der Normalenvektoren der jeweils über dem Oberflächenabschnitt liegenden einen oder mehreren Verfahrbahnen projiziert. An den Schnittlinien und den Übergangsbereichen der Verfahrbahnen bedeutet dies, dass eine Projektion an ggf. zwei Verfahrbahnen durchgeführt werden kann, wobei sich die Projektionen der Raster in diesem Bereich aufgrund der unterschiedlichen Ausrichtungswinkel der jeweiligen Verfahrbahnen unterscheiden können. Die Vektorebenen der Verfahrbahnen mit den projizierten Rasterlinien und Schnittlinien werden anschließend in eine 2-dimensionale Form transformiert. Die 2-dimensionalen Verfahrbahnen werden entsprechend ihrer Positionen nebeneinander positioniert, so dass jeweils die Schnittlinien der benachbarten Verfahrbahnen nebeneinanderliegen. Lassen sich aufgrund ungünstiger Winkelbereiche in den Außenbereichen der Verfahrbahn bestimmte Werkstückoberflächenbereiche nicht adäquat innerhalb bestimmter Winkelabweichungen zum Beschichtungskopf beschichten, so kann die Verfahrbahn auf eine Druckbahn reduziert werden. Die Druckbahn weist dieselbe Ausrichtung aber einen kleineren Flächenbereich verglichen zur Verfahrbahn auf, wobei die Düsen an den Rändern der Verfahrbahn dann nicht mehr zur Beschichtung genutzt werden. Anschließend werden die Schnittlinien der jeweils benachbarten Druckbahnen dahingehend bewertet, ob diese zueinander komplementär sind, das heißt sich lückenlos ergänzen. Lassen sich die Schnittlinien benachbarten Druckbahnen durchgängig aneinander anfügen, so ist keine Harmonisierung der Bilddaten der Druckbahnen erforderlich. Diese Druckbahnen können direkt nebeneinander ausgerichtet über den 2-dimensionalen Bilddaten positioniert werden.

Im Schritt d3) erfolgt eine Anpassung der 2D-Dekor-Druckdaten für jede Rasterfläche, wobei die Anpassung der Druckdaten der Rasterfläche sowohl eine Funktion der ursprünglich bereitgestellten 2D-Daten des Dekors, der Korrektur auf Basis der Soll-Ist-Verfahrbahn als auch eine Funktion der Rasterprojektion an die Verfahrbahn ist. Das durch einen jeweiligen Bereich des Druckkopf aufzubringende Volumen ergibt sich also als Funktion aus der jeweiligen Abweichung der Druckkopfausrichtung von der Oberfläche sowie dem vorgesehenen Schichtvolumen innerhalb des jeweiligen Rasterbereiches. Die Anpassung der Daten einer Rasterfläche ist demzufolge einmal davon abhängig, ob das Dekor überhaupt einen Pixel oder Druckpunkt an dieser Oberflächenstelle vorsieht. Falls das Dekor an dieser Stelle eine Beschichtung vorsieht, dann wird die Pixeldichte zudem als Funktion der Oberflächengeometrie an dieser Oberflächenstelle, proportional transformiert über die Projektion an die Verfahrbahn, korrigiert. Bei parallel verlaufenden Flächen, das heißt die Normalenvektoren der Vektorebene der Verfahrbahn und des jeweiligen Schnittpunktes der Oberflächen sind parallel, sind die Abstände der Projektionen der Rasterlinien gleich zu denen der Rasterlinien auf der Oberfläche. Bei nicht parallelen Verläufen ergeben sich abweichende Abstände, wobei die Abstände der projizierten Rasterlinien nur kleiner/gleich den Abständen auf der Oberfläche sein können. Dieser Effekt ergibt sich daraus, dass mit zunehmender Winkelabweichung die auf der Oberfläche zu bedruckende Strecke steigt. Die Winkelabweichung entspricht dabei der durch die Projektion vernachlässigten Höhenveränderung, durch die die Rasterlinien in der 2-dimensionalen Projektion bei konstantem Abstand auf der Oberfläche scheinbar näher zusammenrücken. Die Bilddaten werden nun so aufbereitet, dass entsprechend der Verringerung des Abstandes der Rasterlinien sowohl in Längs- als auch in Breitenausrichtung die Anzahl der Druckpunkte erhöht wird. Ergebnis dieser Auflösungsanpassung ist, dass zwischen den Rasterlinien auf der Werkstückoberfläche stets dieselbe Zahl an Druckpunkten in Längs- als auch Breitenausrichtung vorhanden ist. Dies kann eine gleichmäßige Beschichtung sicherstellen, welche besonders verzerrungsfreie Bilder und/oder robuste funktionale Bereiche bereitstellt. Die 2D-Dekor-Druckdaten für jede Rasterfläche umfassen dabei mindestens die Anzahl der im Raster aufzubringenden Punkte (Pixel) sowie die Auftragsmenge pro Pixel.

Innerhalb einer bevorzugten Ausführungsform des Verfahrens kann das Anpassen der Ist-Druckkopfdaten im Verfahrensschritt d3) die Auftragsmenge auf die jeweilige Rasterfläche umfassen. Das Anpassen der Volumenmenge pro Rasterfläche hat sich für das vorliegende Verfahren als besonders geeignet erwiesen, wobei insbesondere in den bidirektional gekrümmten Bereichen das Auftragsvolumen der einzelnen Pixel und somit auch das Auftragsvolumen pro Rasterfläche umfassend ein oder mehrere Pixel angepasst wird. Dies kann zu besonders verzerrungsfreien Beschichtungen auch auf schwierig zu bedruckenden Geometrien mit starken Bewegungen der Aktorik beitragen.

Im Rahmen eines bevorzugten Aspektes des Verfahrens kann im Schritt d1) der Normalenvektor für jede Rasterfläche bestimmt werden und die projektionsabhängige Anpassung im Schritt d3) entweder als Funktion - der Winkelabweichungen $\alpha(x,y)$ des Normalenvektors der Rasterfläche in der X- ($\alpha(x)$) wie auch in der Y-Richtung ($\alpha(y)$) zum Normalenvektor der Verfahrbahn; oder - der mittleren Abstände der Rasterlinien in X- ($\Delta X$), in Y-Richtung ($\Delta Y$) oder als Kombination der mittleren Abstände in XY-Richtung ($\Delta XY$) der auf die Verfahrbahn projizierten Rasterlinien erfolgen. Durch die Rasterlinien wird die Werkstückoberfläche in Quadrate oder Rechtecke eingeteilt, wobei ein Oberflächenabschnitt (Raster) durch 4 Rasterlinien begrenzt ist. Bei verzerrten Oberflächenbereichen werden die Quadrate oder Rechtecke aufgrund der Krümmungen in 2 Richtungen selber verzerrt. Bei gleichbleibenden Abständen der Rasterlinien führen unterschiedliche Krümmungen der Teilbereiche zu Krümmungen in den Rasterlinien, woraus die Verzerrung der Flächen resultiert. Für diesen Oberflächenbereich lässt sich ein Normalenvektor festlegen welcher senkrecht auf der durch die Rasterlinien begrenzten Teiloberfläche steht. Ist innerhalb der Rasterfläche die Oberfläche selbst noch gekrümmt, kann der Normalenvektor beispielsweise für die planare Fläche angegeben werden, welche die gekrümmte Oberfläche im Raster schneidet und oberhalb und unterhalb der Schnittlinie zur gekrümmten Werkstückoberfläche im Raster denselben Rauminhalt aufweist. Zur Anpassung der Pixeldichte haben sich die Winkelabweichungen zwischen Normalenvektor der betreffenden Rasterfläche und der Verfahrbahn als besonders geeignet erwiesen. Die prinzipiellen Größen und Relationen zwischen den beiden Normalenvektoren sind dabei weiter hinten in den Figuren dargestellt und diskutiert. Diese Parameter, d.h. die Winkel zwischen beiden Vektoren, lassen sich einfach und reproduzierbar bestimmen und Anpassungen über diese Differenzen führen zu "harmonischen" Pixel-Dichteverläufen. Ebenso harmonische Anpassungen können sich über die Berücksichtigung der "Rasterweite" in der X und der Y-Richtung ergeben. Die Differenz dieser Projektion ist ein Maß für die Abweichung der vorliegenden zu einer planaren Oberflächengeometrie. Falls sich für ein Raster, bedingt über die Oberflächeneigenschaften des Werkstücks, verschiedene Rasterabstände ergeben, wird der mittlere Linienabstand zur Korrektur herangezogen. Die Kombination aus bauteilbedingter Anpassung und unterlassen einer generellen Steuerung basierend auf den Abweichungen in der Aktorik hat sich als besonders günstig herausgestellt. Derart können komplexe Oberflächen auch über mehrere Bauteile hinweg, sicher beschichtet werden.

Weiterhin kann in einer bevorzugten Ausführungsform das gebildete Raster in spezifischen Teilbereichen, z.B. besonders stark verformten Teilbereichen, verfeinert bzw. ein Teil- innerhalb eines Hauptrasters gebildet werden. Das Teilraster kann ebenfalls aus Linienzügen aus äquidistanten Linien $X_1$ parallel zu einer X- und einem weiteren, dazu orthogonalen Linienzug äquidistanter Linien mit dem Abstand $Y_1$ parallel zu einer Y-Richtung ausgebildet sein. Es hat sich als vorteilhaft erwiesen, dass die Abstände $X_1$ bzw. $Y_1$ in einem ganzzahligen Verhältnis zu den Abständen $X_0$ und $Y_0$ des Hauptrasters liegen. In einer besonders vorteilhaften Ausführung liegen die Abstände $X_1$ bzw. $Y_1$ des kleinsten Teilrasters wiederum in einem ganzzahligen Verhältnis zu den Düsenabständen des Beschichtungskopfes. Somit kann beispielsweise in "kritischen" Oberflächenbereichen die volle Auflösung des Druckkopfes und in den anderen Bereichen eine nur verringerte Auflösung genutzt werden.

Innerhalb einer weiter bevorzugten Ausführungsform des Verfahrens kann der aktive Beschichtungsbereich des Druckkopfes als Funktion der maximalen Winkelabweichung zwischen Ist-Verfahrbahn-Normalenvektor und Normalenvektoren der darunterliegenden Rasterflächen festgelegt werden. Unter bestimmten Oberflächengeometrien kann es sich ergeben, dass verglichen mit den anderen Beschichtungsdüsen im "inneren" der Verfahrbahn die Außenbereiche der Verfahrbahn eine zu hohe Winkelabweichung zwischen Oberflächen- und Verfahrbahn-Normalenvektor aufweisen. Um diese Situation abzubilden, kann beispielsweise eine maximale Winkelabweichung zwischen den Normalenvektoren von beispielsweise maximal 25°, bevorzugt maximal 20°, des Weiteren bevorzugt maximal 15° festgelegt werden. Die ausgesparten Bereiche würden dann über eine benachbarte, überlappende Verfahrbahn beschichtet werden. Im erfindungsgemäßen Verfahren kann diese Aufteilung optimiert werden, da durch die Kompensation der Winkelabweichung in den Bilddaten auch Verfahrbahnen gewählt werden können, welche bezüglich der vorliegenden Winkelabweichungen "ungünstiger" sind. Es können also pro Verfahrbahn größere Beschichtungs- oder Druckbereiche gewählt werden, welches zu einer Verringerung der nötigen Anzahl an Verfahrbahnen führt. Diese Einsparung kann zu einem schnelleren und produktiveren Beschichtungsprozess führen. Insbesondere kann diese Ausgestaltung zu Vorteilen führen, da auch schon die Überlappung der Fahrbahnen durch die Ungenauigkeiten in der Aktorik eingeplant ist.

In einer bevorzugten Ausgestaltung des Verfahrens kann die projektionsabhängige Anpassung der Ist-Druckkopfdaten einer Rasterfläche als Funktion der Winkelabweichungen $\alpha(x,y)$ zwischen Normalenvektor der Rasterfläche und Normalenvektor der entsprechenden Verfahrbahn über mindestens zwei Faktoren $F(x,y)$: $F(x) = 1 + \tan(\alpha(x))$ und $F(y) = 1 + \tan(\alpha(y))$ erfolgen. Es hat sich weiterhin als vorteilhaft erwiesen, die Faktoren zur Anpassung der Pixeldichte bzw. des Auftragsvolumens je Wegeinheit der Druckkopfverlaufsbahn bei Winkelabweichungen der Normalenvektoren über oben aufgeführte Faktoren zu erreichen. Diese Faktoren können die Krümmung von Oberflächen kompensieren, so dass auch unter Schwankungen in der Genauigkeit in der Aktorik auf bidirektional gekrümmten Oberflächen ein gleichmäßiges Beschichtungsbild erhalten wird.

Innerhalb einer bevorzugten Charakteristik des Verfahrens kann der Abstand der äquidistanten Linien der Linienzüge in X- ($X_0$) und in Y-Richtung ($Y_0$) größer oder gleich 0,1 mm und kleiner oder gleich 5 mm betragen. Die Wahl der Linienabstände in den unterschiedlichen Richtungen kann als prinzipiell als Funktion der Größe und Oberflächenkrümmung der Werkstückoberfläche erfolgen. In den meisten Fällen hat sich aber oben angegebener Bereich für die Abstände der Rasterlinien als besonders geeignet herausgestellt. Mit diesen Abständen können eine Vielzahl unterschiedlicher Oberflächengeometrien mit einer hinreichenden Anpassung versehen werden, sodass qualitativ bessere Beschichtungen in kürzerer Zeit erhältlich sind. Kleinere Abstände können nachteilig sein, da der Rechenaufwand überproportional steigt, wohingegen grö-βere Abstände zu nur einer "ungenauen" und nicht adäquaten Kompensierung führen können. Bevorzugt können der Abstand der äquidistanten Linien der Linienzüge in X- ($X_0$) und in Y-Richtung ($Y_0$) in Schritt b) größer oder gleich 0,25 mm und kleiner oder gleich 4,5 mm, bevorzugt größer oder gleich 0,3 mm und kleiner oder gleich 4,5 mm betragen.

Des Weiteren erfindungsgemäß ist ein System zur Beschichtung 3-dimensional gekrümmter Oberflächen mindestens aufweisend eine Recheneinheit, einen Aktorik, eine Inkjet-Einheit mit mindestens einem Düsenkopf, einen Sensor und eine Steuereinheit, wobei das System dazu eingerichtet ist das erfindungsgemäße Verfahren auszuführen. Das System kann dabei eine Recheneinheit aufweisen, welche in der Lage ist, die Anpassungen der Pixeldichte, die Festlegung der einzelnen Verfahrbahnen und die Differenz zwischen Soll- und Ist-Bahn in Echtzeit vorzunehmen. Es ist aber auch möglich, bei feststehenden Oberflächengeometrien und feststehenden Dekoren die Berechnung der Anpassung vor dem eigentlichen Druckvorgang vorzunehmen und den Druckkopf mit den angepassten Dekordaten zu versorgen. Dies kann eine Recheneinheit mit einer höheren Rechenleistung verlangen. Die Aktorik kann ein oder mehrere kombinierte X,Y- oder X,Y,Z-Arme umfassen, welche Linear- und/oder Rotationsbewegungen in X,Y,Z ausführen und den Druck-/Düsenkopf und/oder das Werkstück tragen. Der Düsenkopf kann dabei zweckmäßigerweise eine oder mehrere Düsen tragen. Bevorzugt trägt der Druckkopf mehrere, in Reihen angeordnete Druckköpfe. Dies kann die Beschichtungsgeschwindigkeit erhöhen. Die Steuereinheit steuert die Relativbewegung zwischen Kopf und Werkstück und kann zudem die Beschichtungseinheit steuern, beispielsweise über eine Impulsregelung einzelner Reihen oder einzelner Düsen. Das System kann ferner dazu eingerichtet sein, dass Beschichtungsverfahren als Funktion der Bewegung des Beschichtungskopfes singlepass, multipass oder reverse auszugestalten. Der Sensor kann dazu ausgelegt sein, die Orts- und Zeitkomponenten des Druckkopfes während eines Abfahrens der Soll-Verfahrbahn aufzunehmen. Dieser liefert dann die Daten, welche einen Soll-Ist-Vergleich der Verfahrbahnen ermöglicht und die Grundlage zur Anpassung der Bilddaten liefert. Des Weiteren wird explizit auf die Vorteile des erfindungsgemäßen Verfahren Bezug genommen.

Des Weiteren erfindungsgemäß ist die Verwendung des erfindungsgemäßen Verfahrens zur Beschichtung von Automobil- oder Flugzeugteilen. Mittels des erfindungsgemäßen Verfahrens können insbesondere Automobil-Interieur sowie auch -Exterieurteile beschichtet werden. Für die Beschichtung von Werkstücken im Flugzeugbau gilt dies äquivalent. Die Abmessungen der zu beschichtenden Teile und die Krümmungen die diese Teile aufweisen, haben sich für das Verfahren als besonders geeignet erwiesen. Diese Teile können deutlich schneller und verzerrungsfreier beschichtet werden, welches zu einer deutlich besseren Ästhetik und zu deutlichen Einsparungen an Zeit und Energie beitragen kann. Des Weiteren kann vorteilhafterweise durch die erfindungsgemäße Verwendung auch eine bessere Überwachung des funktionalen Status einzelner Systemelemente und insbesondere der Aktorik erhalten werden. Durch die genau festgelegten Bahnverläufe, ohne aktive Korrektur, treten Beschichtungsfehler deutlich eher und vollständiger hervor, sodass auch schon kleinere Abweichungen früher im Prozess erkenn- und korrigierbar sind.

Innerhalb einer bevorzugten Ausgestaltung der Verwendung kann die Beschichtung aus der Gruppe der dekorativen, der funktionalen oder Kombinationen beider Beschichtungstypen ausgesucht sein. Die Beschichtung erfolgt dabei in der Regel durch das Aufbringen von Flüssigkeiten auf die Werkstückoberfläche. Bei den Flüssigkeiten kann es sich beispielsweise um Farben, Oberflächenversiegelungsubstanzen oder um andere funktionale Verbindungen handeln, welche der Oberfläche ein anderes ästhetisches oder funktionales Erscheinungsbild verleihen. Die Beschichtung kann beispielsweise mittels eines Inkjet-Verfahrens erfolgen. Mittels der Beschichtung lassen sich Funktionsschichten herstellen, wobei Funktionsschichten zumindest partiell zusammenhängende Bereiche sind, welche auf die Werkstückoberfläche aufgebracht oder aufgedruckt werden. Diese zusammenhängenden Bereiche erfüllen dabei weitergehende funktionale Eigenschaften auf der Werkstückoberfläche. Diese funktionalen Eigenschaften können beispielsweise haptischer oder optischer Art sein. Denkbar sind leuchtende Bereiche oder das Aufbringen von Dekoren. Es sind aber auch funktionale Bereiche oder Schichten denkbar, welche festgelegt elektrische Eigenschaften in Form von Schaltern aufweisen. Des Weiteren können funktionale Schichten auch weitere optische Eigenschaften in Form von leuchtenden Bereichen bereitstellen. Zusätzlich können über die funktionalen Bereiche auch weitere haptische Eigenschaften, wie beispielsweise ein tastbares Relief darstellen. Weiterhin kann das Beschichtungsmittel mit dem Oberflächenmaterial eine Verbindung eingehen, sich besonders gut wieder von diesem lösen lassen, sowie partiell gezielt die Anhaftung weiterer Schichten folgender Veredelungsprozesse fördern und/oder vermeiden.

Innerhalb einer bevorzugten Ausführungsform der Verwendung kann die Beschichtung eine funktionale Beschichtung aus der Gruppe bestehend aus Fügebeschichtungen, Abstandssensoren, Antennen, Sendeeinrichtungen, kapazitiven Elementen, Ladespulen oder Kombinationen mindestens zweier unterschiedlicher Typen daraus ausgewählt sein. Das erfindungsgemäße Verfahren eignet sich insbesondere für das Aufbringen leitfähiger Strukturen, welche eine besonders gleichmäßige Beschichtung verlangen. Für die oben genannten Verwendungen können dabei die auch sehr schwierige Oberflächengeometrien sehr gleichmäßig und reproduzierbar beschichtet werden. Dies kann die Funktionalität und die Empfindlichkeit der Strukturen deutlich verbessern. Zudem können über das erfindungsgemäße Verfahren auch Befestigungsmittel, wie beispielsweise Klebemittel oder andere Beschichtungsmittel, wie beispielsweise Wasserisolationsschichten, sehr reproduzierbar und ortsgenau aufgebracht werden. Dies kann die Langlebigkeit der Funktionalität der Beschichtung verbessern und im Falle eines Fügeverbunds aus mindestens zwei Werkstücken, welcher durch die Kleberschicht oder -naht zusammengehalten wird, kann es die mechanische Festigkeit und damit auch die Langlebigkeit der Fahrzeuge erhöhen. Prinzipiell können über die erfindungsgemäße Verwendung auch Schweißnähte an Fügestellen von beispielsweise Fahrzeugen sicher und reproduzierbarer platziert werden. Auch ist es mit dem erfindungsgemäßen Verfahren möglich, Abtragsoperationen mit unter anderem Flüssigkeiten wie z.B. dem Wasserstrahl- oder Laserschneiden sowie Ätzoperation unter Einsatz gerichteter Lichtstrahlen präzise und wiederholbar zu gestalten.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken.

Es zeigen die:

Fig. 1      in den Ausgestaltungen a), b), c) Beispiele unterschiedlich gekrümmter/verzerrter Oberflächen - parallel zur Verfahrbahn gekrümmte Oberflächen

Fig. 2      in den Ausgestaltungen a), b), c) Beispiele unterschiedlich gekrümmter/verzerrter Oberflächen - senkrecht zur Verfahrbahn gekrümmte Oberflächen

Fig. 3      in den Ausgestaltungen a), b), c) Beispiele unterschiedlich gekrümmter/verzerrter Oberflächen - bidirektional gekrümmte - verzerrte - Oberflächen

Fig. 4      in den Ansichten a) und b), einen beispielhaften Verlauf einer Verfahrbahn über eine komplexe Oberfläche und Verwendung von Rasterlinien;

Fig. 5      in den Ansichten a) und b), einen beispielhaften Verlauf einer Verfahrbahn über eine komplexe Oberfläche und Verwendung von Rasterlinien;

Fig. 6      Darstellung der Winkelabweichungen zwischen Normalenvektor der Verfahrbahn und Normalenvektor der Rasterfläche;

Fig. 7      eine Darstellung des Verfahrbahn und Druckbereiches von Verfahrbahnen inklusive der möglicherweise auftretenden Überlappungsbereiche;

Fig. 8      in den Ausgestaltungen a) und b), eine Darstellung von Schnittlinien benachbarter Druckbahnen;

Fig. 9      in den Ausgestaltungen a), b), c), eine Darstellung von Schnittlinien benachbarter Druckbahnen;

Fig. 10     in den Ausgestaltungen a), b), c), eine Darstellung von Schnittlinien benachbarter Druckbahnen;

Fig. 11     schematisch den Ablauf des erfindungsgemäßen Verfahrens.

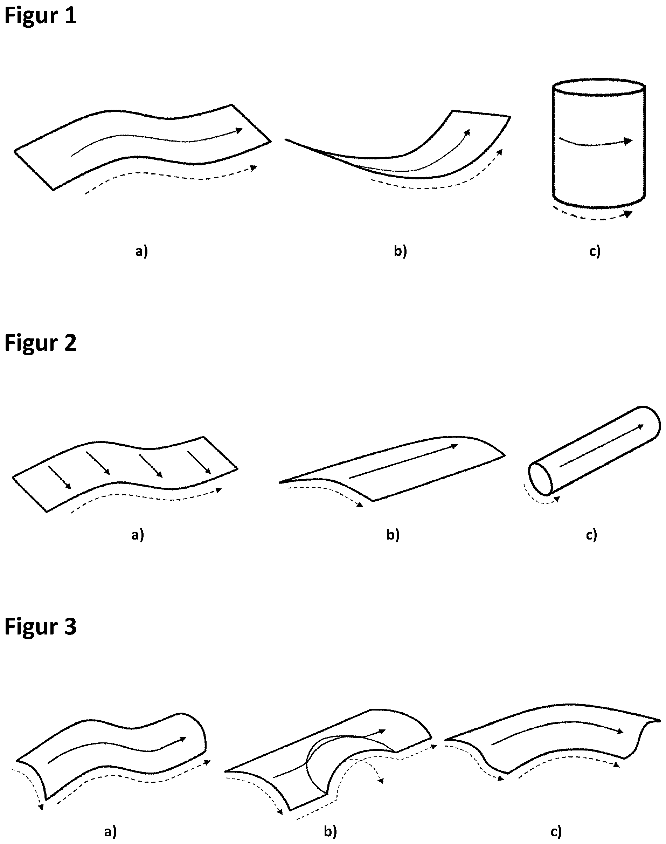

Die Figur 1 zeigt schematisch die Möglichkeiten zur unterschiedlichen Beschichtung von Oberflächen. Die Verfahrbahn des Beschichtungskopfes (dargestellt durch den durchgehenden Pfeil (-)) verfährt in diesen Beispielen a) - c) parallel zur Krümmung der Oberfläche des Werkstücks (dargestellt durch den unterbrochenen Pfeil (- - - - )). Als gekrümmte Oberflächen werden allgemein jene Oberflächen verstanden, die abrollbar sind. Diese zeichnen sich dadurch aus, dass konkave und/oder konvexe Krümmungen nur in Längs- oder in Querrichtung zur Verfahrbahn der Druckeinheit liegen und für jeden Punkt der Ebene sich ein Gerade beschreiben lässt die orthogonal zum Krümmungsverlauf verläuft.

Die Figur 2 zeigt schematisch die Möglichkeiten zur unterschiedlichen Beschichtung von Oberflächen.

Die Verfahrbahn des Beschichtungskopfes (dargestellt durch den durchgehenden Pfeil (-)) verfährt in diesen Beispielen a) - c) 90° versetzt zur Krümmung der Oberfläche des Werkstücks (dargestellt durch den unterbrochenen Pfeil (- - - -)).

Die Figur 3 zeigt schematisch die Möglichkeiten zur unterschiedlichen Beschichtung von Oberflächen. Die Oberfläche des Werkstücks weist Krümmungen in mehr als einer Richtung auf (dargestellt durch die unterbrochenen Pfeile (- - - -)). Dies bedeutet, dass die Oberfläche verzerrt ist. Die verzerrten Oberflächen unterscheiden sich von den gekrümmten Oberflächen darin, dass diese nicht abwickelbar sind. Bei verzerrten Oberflächen müssten beispielsweise aufzubringende Folien in Teilbereichen gedehnt, gestreckt oder gestaucht werden. Die Verfahrbahn des Beschichtungskopfes (dargestellt durch den durchgehenden Pfeil (-)) kann an dieser Werkstückoberfläche nicht stets symmetrisch zur Krümmung verlaufen und es werden bei konstanter Bewegungsrichtungen des Beschichtungskopfes Werkstückoberflächenbereiche mit deutlich anderer Winkelausrichtung zum Beschichtungskopf hin befahren. Neben den Winkelabweichungen werden bei einer konstanten Bewegungsrichtung des Beschichtungskopfes auch verschiedene Strecken auf der Werkstückoberfläche überstrichen.

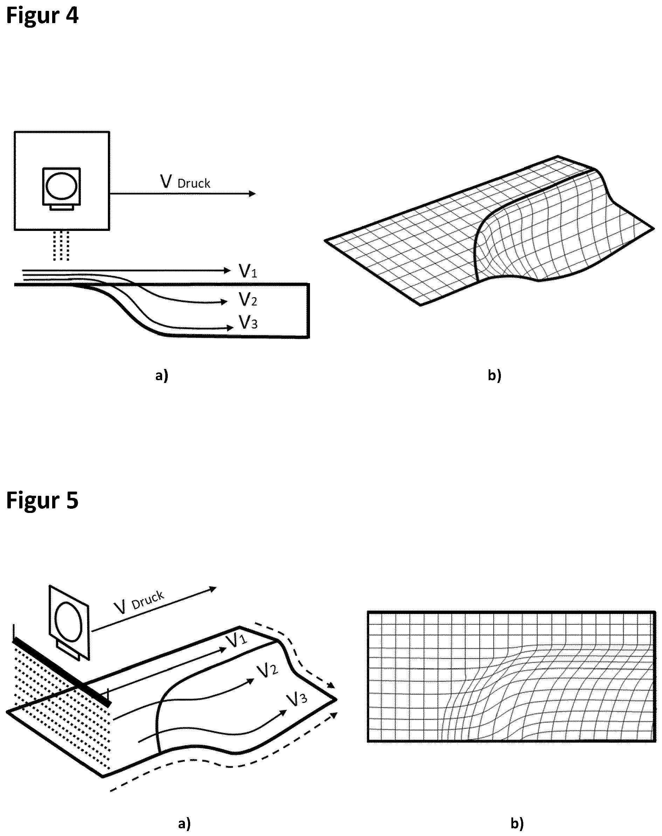

Die Figur 4 und Figur 5 zeigen beispielhaft unterschiedliche Bewegungsbahnen verschiedener Beschichtungsdüsen (V1-V3) eines Inkjet-Kopfes auf einer darunterliegenden konkav und konvex verzerrten Oberfläche a). In den jeweiligen Figuren b) ist die entsprechende Rasterprojektion dargestellt. Insbesondere die abweichende Ausrichtung der jeweiligen Düse zur darunterliegenden Oberfläche hat direkten Einfluss auf die Strecken, die die Düsen auf der darunterliegenden Oberfläche, bei konstanter Bewegung der Druckeinheit, zurücklegen. Diese ergibt sich aus der starren, nicht an die Oberfläche anpassbaren Beschichtungskopfoberfläche. Die Arbeitsweise des Druckkopfes ist als 2-dimensional zu verstehen, unabhängig davon, dass über die Aktorik die Oberfläche und/oder die Beschichtungseinheit eine Relativbewegung mit bis zu 6 Freiheitgraden ausführen kann. Diese Relativbewegung dient dazu, die Druckeinheit möglichst parallel zu jeder Oberflächenposition zuzustellen. Da die Bilddaten nur 2-dimensional abgelegt sind müssen sonstige weitere Daten des Bahnverlaufes wie z.B. Winkelabweichung und Streckenunterschiede bereits in den Bilddaten berücksichtigt werden.

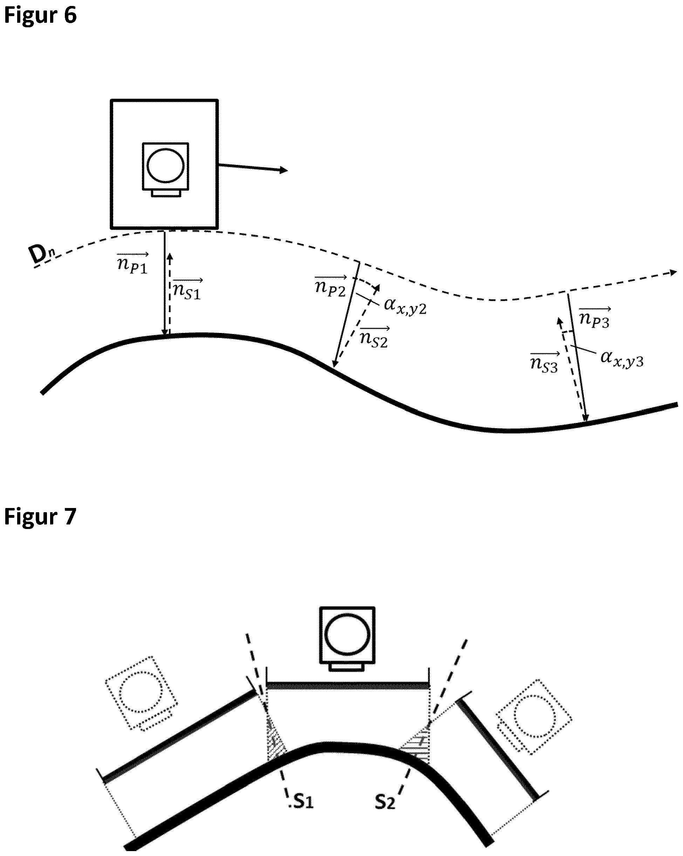

Die Figur 6 zeigt eine beispielhafte Darstellung zum Erhalt der Winkelabweichung zwischen den Normalvektoren der Verfahrbahn (Vektoren mit dem Index P) und dem zugehörigen Normalvektor der Rasterfläche auf der Oberfläche (Vektoren mit dem Index S). Bei kollinearen Normalvektoren ergibt sich keine Winkelabweichung zwischen beiden Normalenvektoren. Für diese Rasterflächen gilt, dass der Normalenvektor der Druckebene ein Vielfaches des Normalenvektors der betreffenden Rasterfläche ist. Die Winkelabweichung beider Normalenvektoren in X- wie auch in Y-Richtung beträgt jeweils null. Ist die Oberfläche gekrümmt, sind die Normalenvektoren nicht mehr kollinear, sondern es ergeben sich je nach Ausrichtung zwischen Werkstückoberfläche und Verfahrbahn Winkelabweichungen jeweils in X- und/oder Y-Richtung ($\alpha(x)$, $\alpha(y)$).

Die Figur 7 zeigt eine Möglichkeit der Aufteilung bidirektional gekrümmter Oberflächen in Verfahr- und Druckbahnen. Dargestellt ist, dass sich die einzelnen Verfahrbahnen auf der Oberfläche überlappen (S1, S2), d.h. dass einzelne Werkstückoberflächenbereiche prinzipiell über mehrere Verfahrbahnen beschichtet werden können. Als Funktion der Krümmung der Oberfläche kann es zweckmäßig sein, pro Verfahrbahn unterschiedliche Beschichtungsbereiche (Druckbahnen) zu wählen. So ist es möglich, dass der konstant gekrümmt (planare) linke Bereich durch eine Druckbahn beschichtet wird, welche der maximal möglichen Verfahrbahn entspricht (großer Beschichtungsbereich pro Verfahrbahn). Überstreicht die Verfahrbahn allerdings einen Bereich mit starken Krümmungen (mittlerer Kopf), so kann es günstig sein, den Druckbereich unter dieser Verfahrbahn klein zu wählen, um die Winkelabweichungen der Oberfläche pro Verfahrbahn nicht zu groß werden zu lassen. Dies ist im Vergleich zur linken Verfahrbahn durch den kleineren horizontalen Strich angedeutet.

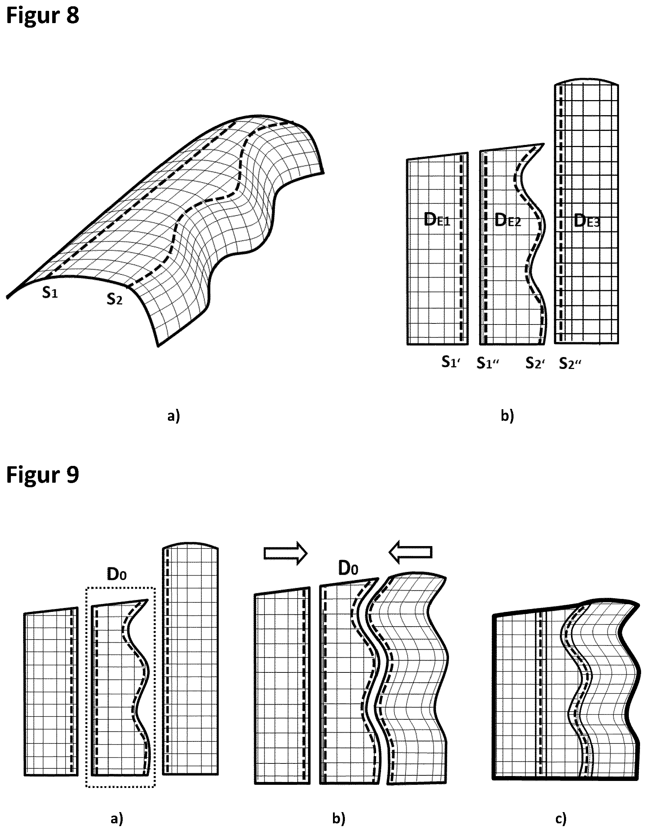

Die Figur 8 zeigt Druckbahnen als Teilbereich von Verfahrbahnen an einer komplexen Werkstückoberfläche. Die Ränder der Druckbahnen an welchen diese aneinanderstoßen werden als Schnittlinien bezeichnet. Je nach gewähltem Verlauf der Verfahr- und Druckbahnen, dem sogenannten Stitching, können die Druckbahnen hart an einander gelegt werden oder sich jeweils auslaufend überlappen. Durch das Stiching ist möglich, die Übergänge zwischen den Druckbahnen über die Drucksystemsteuerung weiter zu kaschieren, dass in späteren Dekoren diese Schnittbereiche nicht zu erkennen sind. Insbesondere bei nicht parallelen Druckbahnen ist zu beachten, dass die Verfahrbahnen abweichende Winkel zur darunterliegenden Fläche des Schnittbereiches aufweisen.

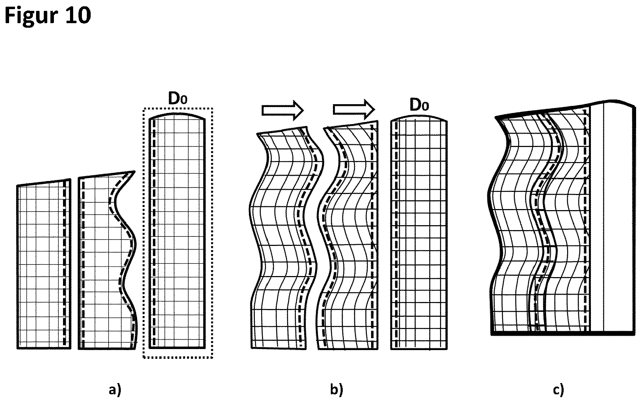

Die Figuren 9 und 10 zeigen komplexe Oberflächen mit den entsprechenden Druckbahnen und Schnittlinien. Auf diesen Oberflächen sind ebenfalls das entsprechende Oberflächenraster und die Schnittlinien angedeutet. Das Dekor der zu bedruckenden Oberfläche setzt sich aus den Segmenten der einzelnen Verfahr- und Druckbahnen zusammen. Damit diese ein homogenes Gesamtbild ergeben, sollten die Bilddaten der einzelnen Druckbahnen so auf einander abgestimmt werden, dass sie ohne sichtbare Sprünge im Dekor aneinandergelegt werden können. Die Bahnen sollten angeglichen werden. Diese Harmonisierung kann unabhängig von der individuellen Oberflächengeometrie unter den jeweiligen Bahnen erfolgen. Sinnvollerweise kann diese abhängig von den Schnittlinien der Druckbahn erfolgen. Dabei kann unter zwei Arten von Schnittlinien unterscheiden werden:

- Benachbarte Druckbahnen mit komplementären Schnittlinien
- Benachbarte Druckbahnen mit nicht komplementären Schnittlinien

Als benachbarte Druckbahnen mit komplementären Schnittlinien werden alle benachbarten Druckbahnen verstanden bei denen die Projektionen der Schnittlinien an die jeweilige Druckbahn komplementär zur Projektion derselben Schnittlinie an die jeweils benachbarte Druckbahn ist. Unter anderem lassen sich parallele Bahnen, also solche welche sich nur hinsichtlich X- und Y-Ausrichtung unterscheiden, sowie Schnittlinien die konstant gerade entlang der X-Achse verlaufen, zu "benachbarten Druckbahnen mit komplementären Schnittlinien" zählen. Es sind aber auch andere Konstellationen denkbar. Bei dieser Art von Druckbahnen können die benachbarten Druckbahnen ohne zusätzliche Bearbeitung der Bilddaten aneinandergelegt werden. Bei benachbarten Druckbahnen mit "nicht komplementären Schnittlinien" lassen sich die Projektionen der Schnittlinie an die beiden Druckbahnen nicht schlüssig aneinanderlegen. Die Ausrichtung des Druckkopfes hat hierbei wesentlichen Einfluss auf die 2-dimensionale Projektion der Schnittlinie, welche den Rahmen für die Bilddaten der jeweiligen Druckbahn definiert. Je nach Ausrichtung kann sich somit die Projektionslänge der Schnittlinie ändern, wodurch eine Anpassung der Bilddaten einer oder beider benachbarter Bahnen erforderlich werden kann, um diese zu harmonisieren.

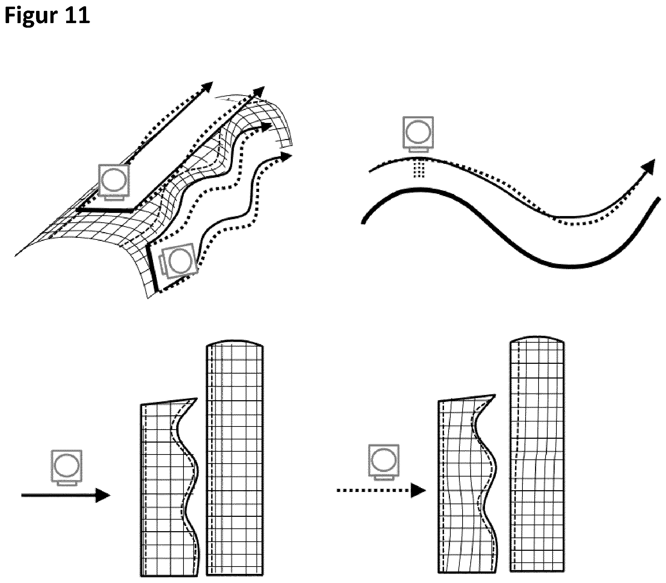

Die Figur 11 zeigt schematisch mögliche Abweichungen zwischen einer Soll- und einer Ist-Verfahrbahn, sowie die Resultate der jeweiligen Rasterprojektionen an die Soll- sowie an die Ist-Verfahrbahn. In der oberen linken Zeichnung sind für zwei Verfahrbahnen die Soll-(schwarze durchgezogene Pfeile) und die Ist-Verfahrbahnen (gestrichelte Pfeile) dargestellt. Beide Verfahrwege unterscheiden sich zumindest in der überstrichenen Oberfläche des Werkstücks und als Folge der Krümmung des Werkstücks auch in der Ausrichtung zwischen Oberfläche und Druckkopf voneinander. Die Ergebnisse der Rasterprojektionen sind für die jeweiligen Soll- (schwarzer durchgezogener Pfeil) und die Ist-Verfahrbahnen (gestrichelter Pfeil) in den unteren beiden Bildern dargestellt. Die Basis für die Unterschiede zwischen Soll- und Ist-Verfahrbahn liegt hauptsächlich in dem anzuwendenden Regel- und/oder Steuerprozess begründet. Diese ergeben sich dadurch, indem Abweichungen erst nach dem Auftreten erfasst und korrigiert werden. Der Aufwand für die Verringerung der Abweichung zwischen Ist- und Soll-Verfahrbahn steigt dabei exponentiell an, da die Mess- und Regeltechnik in immer kleineren Toleranzbereichen und Frequenzen arbeiten muss. Als Resultat einer Abweichung von der Soll-Verfahrbahn können Unterschiede in der Position und/oder der Ausrichtung des Druckkopfes oder des Beschichtungsmediums zur Werkstückoberfläche auftreten, wodurch einerseits die Positionsfehler als solche und/oder die zugehörigen Korrekturen der Verfahrbahn zu Verwacklungen im Dekor führen. Des Weiteren führen die Abweichungen in der Ausrichtung des Druckkopfes zu Winkelabweichungen zwischen dem Normalenvektor der Verfahrbahn und dem Normalenvektor der entsprechend überstrichenen Rasterfläche. Aus diesen Abweichungen ergeben sich bei unkorrigierter Abgabe an Beschichtungsmaterial falsche Volumendichten in den jeweiligen Rasterflächen. Die erfindungsgemäße Berücksichtigung der Bahnabweichung innerhalb der Druckdatenanpassung ermöglicht es, mit geringem Aufwand die Abweichung zwischen Ist- und Soll-Verfahrbahn zu kompensieren.

**Patentansprüche**

1. Verfahren zur digitalen Beschichtung dreidimensionaler Werkstückoberflächen, wobei die Beschichtung über eine Relativbewegung eines Druckkopfs relativ zur Oberfläche des Werkstücks und Ausstoßens eines Beschichtungsmittels vom Druckkopf zur Werkstückoberfläche hin erfolgt, mindestens umfassend die Verfahrensschritte:

   a) Bereitstellen eines oder mehrerer baugleicher Werkstücke mit einem dreidimensionalen Werkstückoberflächenprofil;
   b) Festlegen einer Soll-Verfahrbahn des Druckkopfes über den zu beschichtenden Bereich der dreidimensionalen Werkstückoberfläche, wobei die Festlegung der Soll-Verfahrbahn mindestens die orts- und zeitabhängigen Steuerdaten zur Bewegung des Druckkopfes auf der Soll-Verfahrbahn umfasst;
   c) Ein- oder mehrmaliges Verfahren des Druckkopfes mittels der im Verfahrensschritt
   b) festgelegten Steuerdaten der Soll-Verfahrbahn und Bestimmung der zeit- und ortsaufgelösten Ist-Position des Druckkopfes entlang der Ist-Verfahrbahn mittels eines Sensors ohne Ausstoß eines Beschichtungsmittels;
   d) Bereitstellen der Soll-Verfahrbahn entsprechender Soll-Druckkopfdaten und Anpassen der Soll- auf Ist-Druckkopfdaten, wobei die Anpassung der Druckkopfdaten zumindest die Zeit- und/oder Ortsunterschiede der Ist- zur Soll-Verfahrbahn umfasst; und
   e) Verfahren des Druckkopfes und Beschichten der Werkstückoberfläche unter Ausstoß eines Beschichtungsmittels, wobei die Bewegung des Druckkopfs entsprechend der Steuerdaten der Soll-Verfahrbahn aus Verfahrensschritt b) und der Ausstoß des Beschichtungsmittels anhand der angepassten Ist-Druckkopfdaten aus Verfahrensschritt d) erfolgt;

   wobei der Verfahrensschritt e) ein oder mehrmals an baugleichen Werkstücken durchgeführt wird, wobei unabhängig von den weiteren Ist-Positionen des Druckkopfes auf den jeweiligen Verfahrbahnen keine weitere Anpassung der Steuerdaten der Soll-Verfahrbahn erfolgt.

2. Verfahren nach Anspruch 1, wobei die Anpassung der Soll- auf die Ist-Druckkopfdaten im Verfahrensschritt d) die Unterschiede in der ortsbezogenen Geschwindigkeit und Beschleunigung zwischen Ist- und Soll-Verfahrbahn umfasst.

3. Verfahren nach einem der vorhergehenden Ansprüche, wobei die Beschichtung im Verfahrensschritt e) nur auf Basis der zeitlichen Komponente der Ist-Druckkopfdaten erfolgt.

4. Verfahren einem der vorhergehenden Ansprüche, wobei der gesamte auf der Soll-Verfahrbahn überstrichene Druckbereich des Druckkopfes um $\geq 5\%$ und $\leq 40\%$ größer ist als die zu beschichtende Oberfläche des Werkstücks.

5. Verfahren nach einem der vorhergehenden Ansprüche, wobei die dreidimensionalen Werkstückoberflächen partiell bi-direktional gekrümmte Oberflächenbereiche aufweisen.

6. Verfahren nach Anspruch 5, wobei im Verfahrensschritt d) die Druckkopfdaten einer weiteren Anpassung unterzogen werden, wobei die Anpassung die Schritte umfasst:

   d1) Aufteilen der Werkstückoberfläche in Flächen eines Rasters, wobei die einzelnen Flächen des Rasters aus einem Linienzug äquidistanter Linien mit Abstand $X_0$ parallel zu einer X- und

   einem weiteren, dazu orthogonalen Linienzug äquidistanter Linien mit Abstand $Y_0$ parallel zur einer Y-Richtung ausgebildet werden;
   d2) Projektion der die Rasterflächen begrenzenden Linienzüge an die Ist-Verfahrbahn oberhalb der betreffenden Rasterfläche, wobei die Projektion entlang des Normalenvektors der Verfahrbahn erfolgt;
   d3) Anpassen der Ist-Druckkopfdaten für jede Rasterfläche, wobei die Anpassung der Druckdaten der Rasterfläche sowohl eine Funktion der ursprünglich bereitgestellten Soll-Druckkopfdaten als auch eine Funktion der Rasterprojektion an die Verfahrbahn ist.

7. Verfahren nach Anspruch 6, wobei das Anpassen der Ist-Druckkopfdaten im Verfahrensschritt d3) die Auftragsmenge auf die jeweilige Rasterfläche umfasst.

**8.** Verfahren nach einem der Ansprüche 6 oder 7, wobei im Schritt d1) der Normalenvektor für jede Rasterfläche bestimmt wird und die projektionsabhängige Anpassung in Schritt d3) entweder als Funktion

- der Winkelabweichungen $\alpha(x,y)$ des Normalenvektors der Rasterfläche in der X-$(\alpha(x))$ wie auch in der Y-Richtung $(\alpha(y))$ zum Normalenvektor der Verfahrbahn; oder
- der mittleren Abstände der Rasterlinien in X- $(\Delta X)$, in Y-Richtung $(\Delta Y)$ oder als Kombination der mittleren Abstände in XY-Richtung $(\Delta XY)$ der auf die Verfahrbahn projizierten Rasterlinien

erfolgt.

**9.** Verfahren nach einem der Ansprüche 6 - 8, wobei der aktive Beschichtungsbereich des Druckkopfes als Funktion der maximalen Winkelabweichung zwischen Ist-Verfahrbahn-Normalenvektor und Normalenvektoren der darunterliegenden Rasterflächen festgelegt wird.

**10.** Verfahren nach einem der Ansprüche 8 - 9, wobei die projektionsabhängige Anpassung der Ist-Druckkopfdaten einer Rasterfläche als Funktion der Winkelabweichungen $(\alpha(x,y))$ zwischen Normalenvektor der Rasterfläche und Normalenvektor der entsprechenden Verfahrbahn über mindestens zwei Faktoren F(x,y):

$$F(x) = 1 + \tan(\alpha(x))$$

$$F(y) = 1 + \tan(\alpha(y))$$

erfolgt.

**11.** Verfahren nach einem der Ansprüche 6 - 10, wobei der Abstand der äquidistanten Linien der Linienzüge in X- $(X_0)$ und in Y-Richtung $(Y_0)$ größer oder gleich 0,1 mm und kleiner oder gleich 5 mm beträgt.

**12.** System zur Beschichtung 3-dimensionaler Oberflächen mindestens aufweisend eine Recheneinheit, einen Aktorik, eine Inkjet-Einheit mit mindestens einem Düsenkopf, einen Sensor und eine Steuereinheit, **dadurch gekennzeichnet, dass** das System dazu eingerichtet ist ein Verfahren nach einem der Ansprüche 1 - 11 auszuführen.

**13.** Verwendung eines Verfahrens nach einem der Ansprüche 1-11 zur Beschichtung von Automobil- oder Flugzeugteilen.

**14.** Verwendung nach Anspruch 13, wobei die Beschichtung ausgesucht ist aus der Gruppe der dekorativen, der funktionalen oder Kombinationen beider Beschichtungstypen.

**15.** Verwendung nach einem der Ansprüche 13 oder 14, wobei die Beschichtung eine funktionale Beschichtung ausgewählt aus der Gruppe bestehend aus Fügebeschichtungen, Abstandssensoren, Antennen, Sendeeinrichtungen, kapazitiven Elementen, Ladespulen oder Kombinationen mindestens zweier unterschiedlicher Typen daraus ist.

**Claims**

**1.** A method for digital coating three-dimensional workpiece surfaces, wherein the coating takes place by means of a relative movement of a print head relative to the surface of the workpiece and ejection of a coating agent from the print head towards the workpiece surface, comprising at least the method steps:

a) Providing one or more identical workpieces with a three-dimensional workpiece surface profile;
b) Determining a target trajectory of the print head over the area of the three-dimensional workpiece surface to be coated, the determination of the target trajectory comprising at least the location- and time-dependent control data for moving the print head on the target trajectory;
c) Single or multiple movement of the print head by means of the control data of the target trajectory defined in process step b) and determination of the time- and location-resolved actual position of the print head along the actual trajectory by means of a sensor without ejection of a coating agent;
d) Providing target printhead data corresponding to the target trajectory and adapting the target to actual printhead data, the adaptation of the printhead data comprising at least the time and/or location differences between the actual and target trajectories; and
e) Moving the print head and coating the workpiece surface while ejecting a coating agent, whereby the print head is moved in accordance with the control data of the target trajectory from process step b) and the coating agent is ejected using the adapted actual print head data from process step d);

whereby process step e) is carried out one or more times on identical workpieces, whereby no further adjustment of the control data of the target trajectory is carried out, irrespective of the other actual positions of the print head on the respective trajectories.

**2.** The method according to claim 1, wherein the adaptation of the target printhead data to the actual printhead data in method step d) comprises the differences in the location-related speed and acceleration between the actual and target trajectories.

3. The method according to any one of the preceding claims, wherein the coating in method step e) is carried out on the basis of the time-dependent component of the actual printhead data, only.

4. The method according to any one of the preceding claims, wherein the total print area of the print head covered on the target trajectory is $\geq$ 5% and $\leq$ 40% larger than the surface of the workpiece to be coated.

5. The method according to any one of the preceding claims, wherein the three-dimensional workpiece surfaces have partially bi-directionally curved surface regions.

6. The method according to claim 5, wherein in method step d) the printhead data is subjected to a further adaptation, wherein the adaptation comprises the steps:

   d1) Dividing the workpiece surface into raster areas, whereby the individual raster areas of the raster are formed from a line string of equidistant lines with spacing $X_0$ parallel to an X direction and a further, orthogonal line string of equidistant lines with spacing $Y_0$ parallel to a Y direction;
   d2) Projection of the polylines bounding the raster areas onto the actual trajectory above the relevant raster area, whereby the projection is made along the normal vector of the trajectory;
   d3) Adjusting the actual printhead data for each raster area, where the adjustment of the print data of the raster area is both a function of the originally provided target printhead data and a function of the raster projection to the trajectory.

7. The method according to claim 6, wherein the adaptation of the actual printhead data in method step d3) comprises the application quantity to the respective raster area.

8. The method according to any one of claims 6 or 7, wherein in step d1) the normal vector is determined for each raster area and the projection-dependent adjustment in step d3) is determined either as a function

   - the angular deviations $\alpha(x,y)$ of the normal vector of the raster area in the X ($\alpha(x)$) as well as in the Y direction ($\alpha(y)$) to the normal vector of the ttrajectory; or
   - the mean distances of the grid lines in the X direction ($\Delta X$), in the Y direction ($\Delta Y$) or as a

combination of the mean distances in the XY direction ($\Delta XY$) of the raster lines projected onto the trajectory

takes place.

9. The method according to any one of claims 6-8, wherein the active coating area of the print head is determined as a function of the maximum angular deviation between the actual trajectory normal vector and the normal vectors of the underlying raster area.

10. The method according to any one of claims 8-9, wherein the projection-dependent adaptation of the actual printhead data of a raster area as a function of the angular deviations ($\alpha(x,y)$) between the normal vector of the raster area and the normal vector of the corresponding trajectory via at least two factors F(x,y):

$$F(x) = 1 + \tan(\alpha(x))$$

$$F(y) = 1 + \tan(\alpha(y))$$

takes place.

11. The method according to any one of claims 6 - 10, wherein the distance between the equidistant lines of the line strings in the X direction ($X_0$) and in the Y direction ($Y_0$) is greater than or equal to 0.1 mm and less than or equal to 5 mm.

12. System for coating 3-dimensional surfaces, comprising at least a computing unit, an actuator, an inkjet unit with at least one nozzle head, a sensor and a control unit, **characterized in that** the system is adapted to carry out a method according to one of claims 1-11.

13. Use of a process according to any one of claims 1-11 for coating automotive or aircraft parts.

14. Use according to claim 13, wherein the coating is selected from the group of decorative, functional or combinations of both types of coating.

15. Use according to any one of claims 13 or 14, wherein the coating is a functional coating selected from the group consisting of adhesive coatings, distance sensors, antennas, transmitting devices, capacitive elements, charging coils or combinations of at least two different types thereof.

**Revendications**

1. Procédé de revêtement numérique de surfaces de pièces tridimensionnelles, dans lequel le revêtement a lieu par le biais d'un déplacement relatif d'une tête d'impression par rapport à la surface de la pièce et d'une expulsion d'un produit de revêtement depuis la tête d'impression vers la surface de la pièce, comprenant au moins les étapes de procédé :

    a) préparation d'une ou de plusieurs pièces de construction semblable avec un profil de surface de pièce tridimensionnel ;
    b) détermination d'une trajectoire cible de la tête d'impression au-dessus de la zone à revêtir de la surface de pièce tridimensionnelle, où la détermination de la trajectoire cible comprend au moins les données de commande dépendantes du lieu et du temps pour le déplacement de la tête d'impression sur la trajectoire cible ;
    c) déplacement unique ou multiple de la tête d'impression au moyen des données de commande de la trajectoire cible déterminées dans l'étape de procédé b) et détermination de la position réelle résolue en temps et en lieu de la tête d'impression le long de la trajectoire cible au moyen d'un capteur sans expulsion d'un produit de revêtement ;
    d) préparation des données de tête d'impression cibles correspondantes de la trajectoire cible et adaptation des données de tête d'impression cibles aux données réelles, où l'adaptation des données de tête d'impression comprend au moins les différences en temps et/ou en lieu de la trajectoire réelle par rapport à la trajectoire cible ; et
    e) déplacement de la tête d'impression et revêtement de la surface de pièce moyennant l'expulsion d'un produit de revêtement, où le déplacement de la tête d'impression a lieu conformément aux données de commande de la trajectoire cible provenant de l'étape de procédé b) et l'expulsion du produit de revêtement a lieu à l'aide des données de tête d'impression réelles adaptées provenant de l'étape de procédé d) ;

dans lequel l'étape de procédé e) est exécutée une ou plusieurs fois sur des pièces de construction semblable, où aucune autre adaptation des données de commande de la trajectoire cible n'a lieu de manière indépendante de la nouvelle position réelle de la tête d'impression sur les trajectoires respectives.

2. Procédé selon la revendication 1, dans lequel l'adaptation des données de tête d'impression cibles aux données réelles dans l'étape de procédé d) comprend les différences de vitesse et d'accélération relatives au lieu entre la trajectoire réelle et la trajectoire cible.

3. Procédé selon l'une des revendications précédentes, dans lequel le revêtement dans l'étape de procédé e) n'a lieu que sur la base de la composante temporelle des données de tête d'impression réelles.

4. Procédé selon l'une des revendications précédentes, dans lequel la zone d'impression totale couverte par la trajectoire cible de la tête d'impression est plus grande de $\geq 5\,\%$ et $\leq 40\,\%$ que la surface de la pièce à revêtir.

5. Procédé selon l'une des revendications précédentes, dans lequel les surfaces de pièces tridimensionnelles présentent des zones de surfaces courbes partiellement bidirectionnelles.

6. Procédé selon la revendication 5, dans lequel, dans l'étape de procédé d), les données de tête d'impression doivent être soumises à une nouvelle adaptation, où l'adaptation comprend les étapes de :

    d1) division de la surface des pièce en surfaces d'une trame, où les surfaces individuelles de la trame sont formées à partir de lignes équidistante d'un tracé de lignes avec une distance $X_0$ parallèle à une ligne X et une autre des lignes équidistantes du tracé de lignes orthogonal avec une distance $Y_0$ parallèle à une direction Y ;
    d2) projection des tracés de lignes délimitant les surfaces de la trame sur la trajectoire réelle au-dessus de la surface de trame concernée, où la projection a lieu le long du vecteur normal de la trajectoire ;
    d3) d'adaptation des données de tête d'impression réelles pour chaque surface de trame, où l'adaptation des données d'impression de la surface de trame est à la fois une fonction des données de tête d'impression cibles préparées initialement à l'origine et aussi une fonction de la projection de la trame sur la trajectoire.

7. Procédé selon la revendication 6, dans lequel l'adaptation des données de tête d'impression réelles dans l'étape de procédé d3) comprend la quantité de revêtement sur la surface de trame respective.

8. Procédé selon l'une des revendications 6 ou 7, dans lequel, dans l'étape d1), le vecteur normal est déterminé pour chaque surface de trame et l'adaptation dépendante de la projection dans l'étape d3) a lieu sous forme d'une fonction soit

    - des déviations angulaires $\alpha(x,y)$ du vecteur normal de la surface de trame dans la direction X ($\alpha(x)$) et également dans la direction Y ($\alpha(y)$)

par rapport au vecteur normal de la trajectoire ; soit

- des distances moyennes des lignes de trame dans la direction X ($\Delta$X), dans la direction Y ($\Delta$Y) ou sous forme de combinaison des distances moyennes des lignes de trame projetées dans la direction XY ($\Delta$XY) sur la trajectoire.

**9.** Procédé selon l'une des revendications 6 à 8, dans lequel la zone de revêtement active de la tête d'impression est déterminée sous la forme d'une fonction de la déviation angulaire maximale entre le vecteur normal de la trajectoire réelle et des vecteurs normaux des surfaces de trame se situant en-dessous.

**10.** Procédé selon l'une des revendications 8 à 9, dans lequel l'adaptation dépendante de la projection des données de tête d'impression d'une surface de trame a lieu sous forme d'une fonction des déviations angulaires ($\alpha$(x,y)) entre le vecteur normal de la surface de trame et le vecteur normal de la trajectoire correspondante pour au moins deux facteurs F(x,y) :

$$F(x) = 1 + \tan(\alpha(x))$$

$$F(y) = 1 + \tan(\alpha(y)).$$

**11.** Procédé selon l'une des revendications 6 à 10, dans lequel la distance des lignes équidistantes des tracés de lignes dans la direction X ($X_0$) et dans la direction Y ($Y_0$) est égale ou supérieure à 0,1 mm et inférieure ou égale à 5 mm.

**12.** Système de revêtement de surfaces 3 dimensionnelles présentant au mois une unité de calcul, un actionneur, une unité de jet d'encre avec au moins une tête de buse, un capteur et une unité de commande, **caractérisé en ce que** le système est conçu pour exécuter un procédé selon l'une des revendications 1 à 11.

**13.** Utilisation d'un procédé selon l'une des revendications 1 à 11 pour le revêtement de pièces d'automobiles ou d'avions.

**14.** Utilisation selon la revendication 13, dans laquelle le revêtement est choisi dans le groupe des types de revêtement décoratif, fonctionnel ou de combinaisons des deux.

**15.** Utilisation selon l'une des revendications 13 ou 14, dans laquelle le revêtement est un revêtement fonctionnel choisi dans le groupe constitué des revêtements d'étanchéité, des capteurs de distance, des antennes, des dispositifs émetteurs, d'éléments capacitifs, de bobines de charge ou de combinaisons d'au moins deux types différents parmi eux.

# Figur 1

a)                                    b)                                    c)

# Figur 2

a)                                    b)                                    c)

# Figur 3

a)                                    b)                                    c)

# Figur 4

$V$ Druck

$V_1$

$V_2$

$V_3$

a)

b)

# Figur 5

$V$ Druck

$V_1$

$V_2$

$V_3$

a)

b)

## Figur 6

## Figur 7

# Figur 8

a)

b)

# Figur 9

a)

b)

c)

# Figur 10

a)                    b)                    c)

EP 3 875 280 B1

**Figur 11**

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2838708 B1
- DE 102018121557 A1
- EP 3208746 A1
- US 2009169719 A1
- US 2015062244 A1
- EP 2287722 A1
- US 9878533 B2
- DE 102010004496 A1
- US 20190091712 A1